# EUROPEAN PATENT APPLICATION

(11) **EP 1 876 491 A1**
(43) Date of publication of application: **09.01.2008**
(21) Application number: 07111977.0
(22) Date of filing: 06.07.2007
(51) Int. Cl.: G02F 1/13363, G02F 1/1335, G02B 5/30

(54) **Liquid crystal panel and liquid crystal display**

(30) Priority: 07.07.2006 JP 2006188031; 20.04.2007 JP 2007112304
(71) Applicant: NITTO DENKO CORPORATION, Ibaraki-shi, Osaka 567-8680 (JP)
(72) Inventor: Kitagawa, Takeharu, Osaka, Ibaraki 567-8680 (JP); Kinjou, Naotaka, Osaka, Ibaraki 567-8680 (JP); Hayashi, Daisuke, Osaka, Ibaraki 567-8680 (JP); Nishibe, Takeshi, Osaka, Ibaraki 567-8680 (JP); Ishida, Hideki, Osaka, Ibaraki 567-8680 (JP)
(74) Representative: Behnisch, Werner

(57) **Abstract**

The present invention provides a liquid crystal panel having a high contrast ratio in the front direction. The liquid crystal panel includes a first polarizing plate (51), a second polarizing plate (52), and a liquid crystal cell (10), in which the first polarizing plate is arranged on a display surface side and the second polarizing plate is arranged on a back surface side of the liquid crystal cell. The first polarizing plate includes a first polarizer (21) and a first retardation layer (31) arranged between the first polarizer and the liquid crystal cell. The second polarizing plate includes a second polarizer (22) and a second retardation layer (32) arranged between the second polarizer and the liquid crystal cell. An index ellipsoid of the first retardation layer satisfies nx>ny≥nz, and an index ellipsoid of the second retardation layer satisfies nx=ny>nz. The transmittance of the second polarizing plate is greater than that of the first polarizing plate.

## Description

The present invention relates generally to a liquid crystal panel and a liquid crystal display.

Liquid crystal displays (LCDs) are devices that display characters and images utilizing electro-optical characteristics of liquid crystal molecules, and they have been used widely in mobile phones, notebook computers, liquid crystal televisions, etc. In a LCD, a liquid crystal panel having a polarizing plate arranged on each side of a liquid crystal cell generally is used. For example, in a normally black type LCD, black display can be obtained when no voltage is applied thereto (see Japanese Patent No. 3648240, for example). In recent years, LCDs have come to achieve higher and higher resolution, and they cover a broad range of applications. In accordance with such recent trend, the LCDs are required to achieve a high contrast ratio so that they can display characters and images more clearly.

Therefore, with the foregoing in mind, it is an object of the present invention to provide a liquid crystal panel having a high contrast ratio in the front direction and a liquid crystal display using the same.

In order to achieve the above object, the present invention provides a liquid crystal panel including: a first polarizing plate; a second polarizing plate; and a liquid crystal cell, in which the first polarizing plate is arranged on a display surface side of the liquid crystal cell and the second polarizing plate is arranged on a back surface side of the liquid crystal cell. In this liquid crystal panel, the first polarizing plate includes a first polarizer and a first retardation layer and the first retardation layer is arranged between the first polarizer and the liquid crystal cell, the second polarizing plate includes a second polarizer and a second retardation layer and the second retardation layer is arranged between the second polarizer and the liquid crystal cell, an index ellipsoid of the first retardation layer satisfies a relationship of nx > ny ≥ nz, an index ellipsoid of the second retardation layer satisfies a relationship of nx = ny > nz, and a transmittance (T₂) of the second polarizing plate is greater than a transmittance (T₁) of the first polarizing plate.

A liquid crystal display of the present invention includes a liquid crystal panel, which is the liquid crystal panel according to the present invention.

In the liquid crystal panel of the present invention, the first polarizing plate configured as above is arranged on the display surface side of the liquid crystal cell, and the second polarizing plate configured as above is arranged on the back surface side of the liquid crystal cell. Furthermore, the transmittance (T₂) of the second polarizing plate is greater than the transmittance (T₁) of the first polarizing plate. With this configuration, the liquid crystal panel of the present invention exhibits excellent display characteristics with its contrast ratio in the front direction being much higher than that in conventional liquid crystal panels.
FIG. 1 is a schematic sectional view showing an example of the configuration of a liquid crystal panel of the present invention.
FIG. 2 is a schematic view showing the concept of an example of a manufacturing process of a polarizer to be used in the liquid crystal panel of the present invention.
FIG. 3 is a schematic sectional view showing the configuration of an example of a liquid crystal display of the present invention.

In the present invention, a transmittance (T) of the polarizing plate is a Y value whose luminous factor has been corrected in view of a two-degree visual field (C light source) according to JIS Z 8701 (1982 version) and can be measured by the method described later in the examples, for instance.

In the present invention, a refractive index "nx" denotes a refractive index in a direction (a slow axis direction) in which a refractive index within a plane of the liquid crystal cell or the retardation layer reaches its maximum, a refractive index "ny" denotes a refractive index in a direction (a fast axis direction) that is orthogonal the nx direction within the plane of the liquid crystal cell or the retardation layer, and a refractive index "nz" denotes a refractive index in the thickness direction of the liquid crystal cell or the retardation layer, which is orthogonal to each of the nx and ny directions.

In the present invention, a retardation value (Re[λ]) within a plane of the retardation layer denotes a retardation value within the plane of the retardation layer at a wavelength λ (nm) at 23°C, for instance. Re[λ] is calculated based on an equation: Re[λ] = (nx - ny) × d, where d (nm) is the thickness of the retardation layer. Re[λ] can be measured by the method described later in the examples, for instance.

In the present invention, a retardation value (Rth[λ]) in the thickness direction of the liquid crystal cell or the retardation layer denotes a retardation value in the thickness direction of the liquid crystal cell or the retardation layer at a wavelength of λ (nm) at 23°C, for instance. Rth[λ] is calculated based on an equation: Rth[λ] = (nx - nz) × d, where d (nm) is the thickness of the liquid crystal cell or the retardation layer. Rth[λ] can be measured by the method described later in the examples, for instance.

In the present invention, a birefringence (Δn_{xz}[λ]) in the thickness direction of the retardation layer is a value obtained by calculation based on an equation: Δn_{xz}[λ] = Rth[λ]/d, where d (nm) is the thickness of the retardation layer. Rth[λ] is as described above.

In the present invention, an Nz coefficient is a value obtained by calculation based on an equation: Nz coefficient = Rth[λ]/Re[λ]. λ can be set to 590 nm, for instance.

In the present invention, "nx = ny" or "ny = nz" not only means that they are completely the same, but also encompasses the case where they are substantially the same. Therefore, for example, when it is described that nx = ny, it encompasses the case where Re[590] is less than 10 nm.

In the present invention, the term "orthogonal" also encompasses the case of "substantially orthogonal", which means, for example, the deviation is within the range from 90°±2°, preferably from 90°±1°. Also, in the present invention, the term "parallel" also encompasses the case of "substantially parallel", which means, for example, the deviation is within the range from 0°±2°, preferably from 0°±1°.

In the liquid crystal panel of the present invention, it is preferable that the difference (ΔT = T₂ - T₁) between the transmittance (T₂) of the second polarizing plate and the transmittance (T₁) of the first polarizing plate is in the range from 0.1% to 6.0%. By using two polarizing plates having the transmittance difference in the above-described range, it is possible to obtain a liquid crystal panel having a still higher contrast ratio in the front direction.

In the liquid crystal panel of the present invention, it is preferable that the liquid crystal cell contains liquid crystal molecules which are in homeotropic alignment.

In the liquid crystal panel of the present invention, it is preferable that the transmittance (T₁) of the first polarizing plate is in the range from 38.3% to 43.3%. By setting T₁ in the above-described range, it is possible to obtain a liquid crystal panel having a still higher contrast ratio in the front direction.

In the liquid crystal panel of the present invention, it is preferable that the transmittance (T₂) of the second polarizing plate is in a range from 41.1% to 44.3%. By setting T₂ in the above-described range, it is possible to obtain a liquid crystal panel having a still higher contrast ratio in the front direction.

In the liquid crystal panel of the present invention, it is preferable that the polarization ratio of at least one of the first polarizing plate and the second polarizing plate is at least 99%. By setting the polarization ratio to at least 99%, it is possible to obtain a liquid crystal panel having a still higher contrast ratio in the front direction.

In the liquid crystal panel of the present invention, it is preferable that at least one of the first polarizer and the second polarizer contains a polyvinyl alcohol resin containing iodine.

In the liquid crystal panel of the present invention, it is preferable that the difference (ΔI = I₁ - I₂) between an iodine content (I₁) in the first polarizer and an iodine content (I₂) in the second polarizer is in a range from 0.1 to 2.6 wt%. By setting the relationship between the iodine contents in the respective polarizers in the above-described range, it is possible to obtain a polarizing plate in which the relationship between the transmittances is in a more preferable range. As a result, it is possible to obtain a liquid crystal panel having a still higher contrast ratio in the front direction.

In the liquid crystal panel of the present invention, it is preferable that at least one of the iodine content (I₁) in the first polarizer and the iodine content (I₂) in the second polarizer is in the range from 1.8 to 5.0 wt%. By setting the iodine content of each polarizer in the above-described range, it is possible to obtain a polarizing plate whose transmittance is in a more preferable range. As a result, it is possible to obtain a liquid crystal panel having a still higher contrast ratio in the front direction.

In the liquid crystal panel of the present invention, it is preferable that a slow axis of the first retardation layer is orthogonal to an absorption axis of the first polarizer. Generally, the first polarizer is produced by stretching a material for forming the first polarizer in the longitudinal direction between a plurality of rolls. On the other hand, the first retardation layer is produced by, for example, subjecting a material for forming the first retardation layer to transverse uniaxial stretching. Therefore, when the slow axis of the first retardation layer and the absorption axis of the first polarizer are in a relationship such that they are orthogonal to each other, it becomes possible to carry out the lamination of the first retardation layer and the first polarizer successively in the same direction by roll-to-roll processing, resulting in improved manufacturing efficiency.

In the liquid crystal panel of the present invention, it is preferable that a retardation value (Re₁[590]) within a plane of the first retardation layer at a wavelength of 590 nm is in the range from 50 to 200 nm. By setting Rei[590] in the above-described range, it is possible to obtain a liquid crystal panel having a still higher contrast ratio in the front direction.

In the liquid crystal panel of the present invention, it is preferable that the index ellipsoid of the first retardation layer has a relationship of nx > ny > nz (negative biaxiality). When the first retardation layer satisfies negative biaxiality, it is possible to obtain a liquid crystal panel that has a high contrast ratio in the front direction and also has a high contrast ratio in the oblique direction. In this case, it is preferable that the difference (Rth₁[590] - Re₁[590]) between a retardation value (Rth₁[590]) of the first retardation layer in a thickness direction at the wavelength of 590 nm and a retardation value (Re₁[590]) within a plane of the first retardation layer at the wavelength of 590 nm is in the range from 10 to 100 nm. By setting the difference (Rth₁[590] - Re₁[590]) in the above-described range, it is possible to obtain a liquid crystal panel having a still higher contrast ratio in the oblique direction. In addition to this, or instead of this, it is preferable that an Nz coefficient of the first retardation layer at the wavelength of 590 nm is in the range from 1.1 to 3.0. By setting the Nz coefficient of the first retardation layer in the above-described range, it is possible to obtain a liquid crystal panel having a still higher contrast ratio also in the oblique direction.

In the liquid crystal panel of the present invention, it is preferable that the first retardation layer is a retardation film (A) containing a norbornene resin.

In the liquid crystal panel of the present invention, it is preferable that the retardation film (A) containing the norbornene resin is a film produced by a fixed-end stretching method. This is because a retardation film whose index ellipsoid has the relationship of nx > ny > nz (negative biaxiality) can be obtained easily when the film is produced by the fixed-end stretching method.

In the liquid crystal panel of the present invention, it is preferable that a retardation value (Rth₂[590]) of the second retardation layer in a thickness direction at a wavelength of 590 nm is in the range from 100 to 400 nm. By setting Rth₂[590] in the above-described range, it is possible to obtain a liquid crystal panel having a still higher contrast ratio in the front direction.

In the liquid crystal panel of the present invention, it is preferable that the second retardation layer is any one of a retardation film (B1) containing a polyimide resin, a retardation film (B2) containing a cellulose resin, and a laminate (C) of the retardation film (B1) and the retardation film (B2).

In the liquid crystal panel of the present invention, it is preferable that, in at least one of lamination of the first polarizer and the first retardation layer and lamination of the second polarizer and the second retardation layer, the polarizer and the retardation layer are laminated via an adhesive layer.

In the liquid crystal panel of the present invention, it is preferable that the adhesive layer contains a water-soluble adhesive containing a polyvinyl alcohol resin.

In the liquid crystal panel of the present invention, it is preferable that the water-soluble adhesive containing the polyvinyl alcohol resin further contains a metal compound colloid.

In the following, the present invention will be described in detail.

### [A. Liquid crystal panel of the present invention]

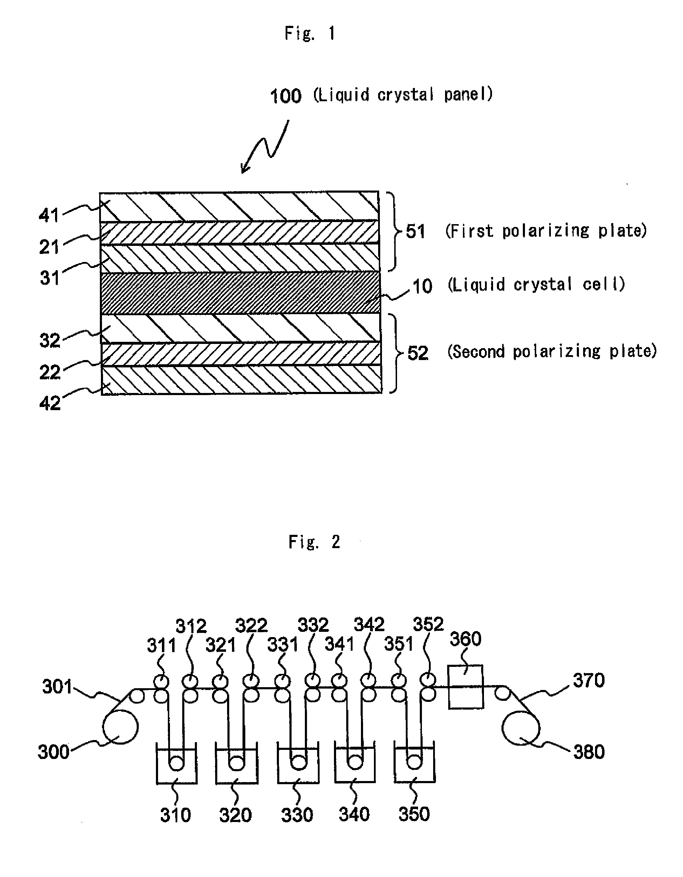

An example of the configuration of a liquid crystal panel of the present invention is shown in the schematic sectional view of FIG. 1. In FIG. 1, the sizes, proportions, etc. of the respective components are different from the actual sizes, proportions, etc. for the sake of simplicity in illustration. As shown in FIG. 1, this liquid crystal panel 100 includes a first polarizing plate 51, a second polarizing plate 52, and a liquid crystal cell 10 as main components. The first polarizing plate 51 is arranged on the display surface side (the upper side in FIG. 1) of the liquid crystal cell 10. The second polarizing plate 52 is arranged on the back surface side (the lower side in FIG. 1) of the liquid crystal cell 10. The first polarizing plate 51 includes a first polarizer 21, a first retardation layer 31, and a first protective layer 41 as main components. The first retardation layer 31 is arranged between the first polarizer 21 and the liquid crystal cell 10. The first protective layer 41 is arranged on the first polarizer 21 on a side opposite to the liquid crystal cell 10 side. The second polarizing plate 52 includes a second polarizer 22, a second retardation layer 32, and a second protective layer 42 as main components. The second retardation layer 32 is arranged between the second polarizer 22 and the liquid crystal cell 10. The second protective layer 42 is arranged on the second polarizer 22 on a side opposite to the liquid crystal cell 10 side. The index ellipsoid of the first retardation layer has the relationship of nx > ny ≥ nz. The index ellipsoid of the second retardation layer has the relationship of nx = ny > nz. The transmittance (T₂) of the second polarizing plate is greater than the transmittance (T₁) of the first polarizing plate. In such a liquid crystal panel, the contrast ratio in the front direction is much higher than that in conventional liquid crystal panels (typically configured so that two polarizing plates arranged on the respective sides of the liquid crystal cell have the same transmittance). The fact that the contrast ratio in the front direction is improved significantly by setting the transmittance of the polarizing plate arranged on the back surface side of the liquid crystal cell to be greater than the transmittance of the polarizing plate arranged on the display surface side as described above is newly discovered by the inventors of the present invention and is an unexpected advantageous effect. In the present invention, the planar shape of the liquid crystal cell is a four-sided shape with 90° corners, which may be either square or rectangular. However, a rectangular shape is more preferable. Furthermore, in the present invention, the planar shape of each of the components such as the polarizers, the retardation layers, and the protective layers preferably is a four-sided shape with 90° corners, which may be either square or rectangular. However, a rectangular shape corresponding to the planar shape of the liquid crystal cell is more preferable.

As described above, it is preferable that the difference (ΔT = T₂ - T₁) between the transmittance (T₂) of the second polarizing plate and the transmittance (T₁) of the first polarizing plate is in the range from 0.1% to 6.0%. By using two polarizing plates having the transmittance difference in the above-described range, it is possible to obtain a liquid crystal panel having a still higher contrast ratio in the front direction. It is more preferable that the difference (ΔT = T₂ - T₁) is in the range from 0.1% to 5.0%, still more preferably from 0.2% to 4.5%, and particularly preferably from 0.3% to 4.0%.

Between the respective components (the optical elements) of the liquid crystal panel, an adhesive layer (not shown) or an optical element (preferably, the one exhibiting isotropy) may be arranged optionally. The "adhesive layer" refers to a layer that joins the surfaces of adjacent optical elements and integrates them with a practically sufficient adhesion strength within a practically acceptable adhesion time. Examples of the material for forming the adhesive layer include conventionally known adhesives, pressure-sensitive adhesives, and anchor coating agents. The adhesive layer may have a multilayer structure in which an anchor coating layer is formed on a surface of a substance to be joined and an adhesive layer is formed on the anchor coating layer. Furthermore, the adhesive layer may be a thin layer (also referred to as a hairline) that cannot be recognized with the naked eye.

### [B. Liquid crystal cell]

As the liquid crystal cell to be used in the present invention, any suitable liquid crystal cell can be employed. As the liquid crystal cell, an active-matrix type liquid crystal cell using a thin film transistor can be used, for example. Furthermore, as the liquid crystal cell, a simple-matrix type liquid crystal cell as used in a super-twisted nematic liquid crystal display or the like also can be used.

Preferably, the liquid crystal cell includes a pair of substrates and a liquid crystal layer as a display medium sandwiched between the pair of substrates. It is preferable that one substrate (an active matrix substrate) included in the pair of substrates is provided with a switching element (e.g., a TFT) for controlling the electro-optical characteristics of the liquid crystal and a scanning line for supplying a gate signal and a signal line for transmitting a source signal to this active element. It is preferable that the other substrate (e.g., a color filter substrate) included in the pair of substrates is provided with a color filter.

The color filter may be provided in the active matrix substrate. The color filter may be omitted when the liquid crystal display includes light sources of three colors, namely, RGB (the liquid crystal display may include light sources for more than three colors) as illuminating means as in the case of a field sequential system, for example. The distance between the pair of substrates (i.e., the cell gap) is controlled by a spacer, for example. The cell gap is in the range from 1.0 to 7.0 µm, for example. On the side of each substrate that is in contact with the liquid crystal layer, an alignment film formed of, e.g., polyimide is provided. The alignment film may be omitted when initial alignment of the liquid crystal molecules is controlled by utilizing a fringe electric field generated by a patterned transparent substrate, for example.

Preferably, the index ellipsoid of the liquid crystal cell has the relationship of nz > nx = ny. Examples of the liquid crystal cell with an index ellipsoid having the relationship of nz > nx = ny include, according to the classification based on the driving mode of the liquid crystal cell, liquid crystal cells of vertical alignment (VA) mode, twisted nematic (TN) mode, vertical-aligned electrically controlled birefringence (ECB) mode, and optically compensated birefringence (OCB) mode. In the present invention, it is particularly preferable that the driving mode of the liquid crystal cell is the VA mode.

In the VA mode liquid crystal cell, liquid crystal molecules that are in homeotropic alignment are caused to respond to an electric field that is normal to the substrate by utilizing a voltage control birefringence effect in the absence of an electric field. Specifically, as described in, e.g., JP 62(1987)-210423 A and JP 4(1992)-153621 A, in the case of a normally black-type liquid crystal cell, liquid crystal molecules are aligned in the normal direction with respect to the substrate in the absence of an electric field. Thus, black display can be obtained by causing the alignments in the polarizing plates provided on upper and lower sides to be orthogonal to each other. On the other hand, in the presence of an electric field, the liquid crystal molecules operate so as to incline toward 45° direction with respect to the absorption axis of the polarizing plate. Thus, the transmittance becomes greater, so that white display can be obtained.

The VA-mode liquid crystal cell may have a multi-domain structure by forming a slit in an electrode or by using a base having a projection on its surface, as described in JP 11(1999)-258605 A, for example. Examples of such a liquid crystal cell include "ASV(Advanced Super View) mode (trade name)" manufactured by Sharp Corporation, "CPA (Continuous Pinwheel Alignment) mode (trade name)" manufactured by Sharp Corporation, "MVA (Multi-domain Vertical Alignment) mode (trade name)" manufactured by Fujitsu Ltd., "PVA (Patterned Vertical Alignment) mode (trade name)" manufactured by Samsung Electronics, "EVA (Enhanced Vertical Alignment) mode (trade name)" manufactured by Samsung Electronics, and "SURVIVAL (Super Ranged Viewing Vertical Alignment) mode (trade name)" manufactured by Sanyo Electric Co., Ltd.

Rth_{LC}[590] of the liquid crystal cell in the absence of an electric field preferably is in the range from -500 to -200 nm, more preferably from -400 to -200 nm. Rth_{LC}[590] is set as appropriate by adjusting the birefringence of the liquid crystal molecules and the cell gap, for example.

As the liquid crystal cell, it is possible to use a liquid crystal cell equipped in a commercially available liquid crystal display as it is, for example. Examples of a commercially available liquid crystal display including the VA mode liquid crystal cell include liquid crystal televisions "AQUOS series (trade name)"manufactured by Sharp Corporation, liquid crystal televisions "BRAVIA series (trade name)" manufactured by Sony Corp., a 32V-type wide-screen liquid crystal television "LN32R51B (trade name)" manufactured by SAMSUNG, a liquid crystal television "FORIS SC26XD1 (trade name)" manufactured by Eizo Nanao Corp., and a liquid crystal television "T460HW01 (trade name)" manufactured by AU Optronics.

### [C. Polarizing plate]

It is preferable that the first polarizing plate and the second polarizing plate are arranged so that their absorption axes are orthogonal to each other. The thickness of each of the first polarizing plate and the second polarizing plate is in the range from 20 to 300 µm, for example. By setting the thickness in the above-described range, it is possible to obtain a polarizing plate having a still higher mechanical strength.

As described above, the transmittance (T₁) of the first polarizing plate preferably is in the range from 38.3% to 43.3%. By setting T₁ in the above-described range, it is possible to obtain a liquid crystal panel having a still higher contrast ratio in the front direction. It is more preferable that T₁ is in the range from 38.6% to 43.2%, still more preferably from 39.9% to 43.1%, and particularly preferably from 39.2% to 43.0%.

As described above, the transmittance (T₂) of the second polarizing plate preferably is in the range from 41.1% to 44.3%. By setting T₂ in the above-described range, it is possible to obtain a liquid crystal panel having a still higher contrast ratio in the front direction. It is more preferable that T₂ is in the range from 41.5% to 44.3%, still more preferably from 41.9% to 44.2%, and particularly preferably from 42.3% to 44.2%.

Examples of a method of increasing or decreasing the transmittance of the first polarizing plate and the second polarizing plate include, when each of the first polarizing plate and the second polarizing plate includes a polarizer that contains a polyvinyl alcohol resin containing iodine, adjusting the iodine content in the polarizer. Specifically, by decreasing the iodine content in the polarizer, it is possible to increase the transmittance of each of the first polarizing plate and the second polarizing plate. This method is applicable to the production of a polarizing plate in a roll form and also to the production of each sheet of polarizing plate. The details of the polarizer will be described later.

As described above, the polarization ratio of at least one of the first polarizing plate and the second polarizing plate preferably is at least 99%. By setting the polarization ratio to at least 99%, it is possible to obtain a liquid crystal panel having a still higher contrast ratio in the front direction. It is more preferable that the polarization ratio is at least 99.5%, still more preferably 99.8%. The polarization ratio can be measured by, for example, using a spectrophotometer (Murakami Color Research Laboratory, trade name "DOT-3"). The specific measurement method of the polarization ratio is as follows. The parallel transmittance (Ho) and the crossed transmittance (H₉₀) of each of the first polarizing plate and the second polarizing plate are measured, and the polarization ratio can be determined based on an equation: polarization ratio (%) = {(H₀ - H₉₀)/(H₀ + H₉₀)}^{½} × 100. The parallel transmittance (Ho) is a transmittance of a parallel-type laminated polarizing plate produced by laminating two identical polarizing plates such that their absorption axes are parallel to each other. The crossed transmittance (H₉₀) is a transmittance of an orthogonal-type laminated polarizing plate produced by laminating two identical polarizing plates such that their absorption axes are orthogonal to each other. Note here that these transmittances are Y values whose luminous factors have been corrected in view of a two-degree visual field (C light source) according to JIS Z 8701 (1982 version).

### [D. Polarizer]

In the present invention, the "polarizer" refers to an element that can convert natural light or polarized light into any polarized light. The polarizer to be used in the present invention is not particularly limited, but preferably is the one that converts natural light or polarized light into linearly polarized light. Such a polarizer has a function of, when incident light is divided into two polarization components orthogonal to each other, allowing one of the polarization components to pass therethrough while preventing the other polarization component from passing therethrough by absorption, reflection, diffusion, or the like.

The first polarizer and the second polarizer used in the present invention preferably contain a polyvinyl alcohol resin containing iodine. Each of the first polarizer and the second polarizer can be obtained by stretching a polymer film that contains a polyvinyl alcohol resin containing iodine, for example. Such a polarizer has excellent optical characteristics.

The iodine content (I₁) in the first polarizer and the iodine content (I₂) in the second polarizer preferably has the relationship of I₁ > I₂. The difference (ΔI = I₁-I₂) between the iodine content (I₁) in the first polarizer and the iodine content in the second polarizer (I₂) preferably is in the range from 0.1 to 2.6 wt%. By setting the relationship of the iodine contents of the respective polarizers in the above-described range, it is possible to obtain a polarizing plate in which the relationship between the transmittances is in a more preferable range. As a result, it is possible to obtain a liquid crystal panel having a still higher contrast ratio in the front direction. It is more preferable that the difference (ΔI = I₁- I₂) is in the range from 0.1 to 2.0 wt%, still more preferably from 0.1 to 1.4 wt%, and particularly preferably, from 0.15 to 1.2 wt%.

Preferably, the iodine content in each of the first polarizer and the second polarizer is in the range from 1.8 to 5.0 wt%. By setting the iodine content of each of the polarizer in the above-described range, it is possible to obtain a polarizing plate whose transmittance is in a more preferable range. As a result, it is possible to obtain a liquid crystal panel having a still higher contrast ratio in the front direction. More preferably, the iodine content in each of the first polarizer and the second polarizer is in the range from 2.0 to 4.0 wt%. The iodine content in the first polarizer preferably is in the range from 2.3 to 5.0 wt%, more preferably from 2.5 to 4.5 wt%, and still more preferably from 2.5 to 4.0 wt%. The iodine content in the second polarizer preferably is in the range from 1.8 to 3.5 wt%, more preferably from 1.9 to 3.2 wt%.

It is preferable that the first polarizer and the second polarizer further contain potassium. The potassium content preferably is in the range from 0.2 to 1.0 wt%. By setting the potassium content in the above-described range, it is possible to obtain a polarizing plate having a transmittance in a more preferable range and a still higher polarization ratio. More preferably, the potassium content is in the range from 0.3 to 0.9 wt%, still more preferably in the range from 0.4 to 0.8 wt%.

It is preferable that the first polarizer and the second polarizer further contain boron. The boron content preferably is in the range from 0.5 to 3.0 wt%. By setting the boron content in the above-described range, it is possible to obtain a polarizing plate having a transmittance in a more preferable range and a still higher polarization ratio. More preferably, the boron content is in the range from 1.0 to 2.8 wt%, still more preferably in the range from 1.5 to 2.6 wt%.

The polyvinyl alcohol resin can be obtained by, for example, saponifying a vinyl ester polymer that is obtained by polymerizing a vinyl ester monomer. The saponification degree of the polyvinyl alcohol resin preferably is in the range from 95.0 to 99.9 mol%. By using the polyvinyl alcohol resin with the saponification degree in the above-described range, it is possible to obtain a polarizer with a higher durability.

With regard to the average polymerization degree of the polyvinyl alcohol resin, any suitable value can be selected as appropriate in accordance with the purpose of using the polyvinyl alcohol resin. The average polymerization degree preferably is in the range from 1200 to 3600. The average polymerization degree can be determined according to JIS K 6726 (1994 version), for example.

As a method of obtaining a polymer film containing the polyvinyl alcohol resin, any suitable processing method can be employed. An example of the processing method includes the one that described in [Example 1] of JP 2000-315144 A.

The polymer film containing the polyvinyl alcohol resin preferably contains at least one of a plasticizer and a surfactant. Examples of the plasticizer include polyhydric alcohols such as ethylene glycol and glycerin. Examples of the surfactant include nonionic surfactants. The content of the plasticizer and the surfactant preferably is in the range from 1 to 10 parts by weight with respect to 100 parts by weight of the polyvinyl alcohol resin. The plasticizer and the surfactant further enhance the dye-affinity and the stretchability of the polarizer, for example.

As the polymer film containing the polyvinyl alcohol resin, it is possible to use a commercially available film as it is, for example. Examples of the commercially available polymer film containing the polyvinyl alcohol resin include "Kuraray Vinylon Film (trade name)" manufactured by Kuraray Co., Ltd., "Tohcello Vinylon Film (trade name)" manufactured by Tohcello Co., Ltd., and "Nichigo vinylon film (trade name)" manufactured by Nippon Synthetic Chemical Industry Co., Ltd.

One example of a method for manufacturing the polarizer will be described with reference to FIG. 2. FIG. 2 is a schematic view showing the concept of a typical manufacturing process of the polarizer used in the present invention. As shown in FIG. 2, a polymer film 301 containing a polyvinyl alcohol resin is fed from a feed portion 300, and is immersed in a swelling bath 310 containing pure water and a dye bath 320 containing an aqueous solution of iodine and potassium iodide, and is subjected to a swelling treatment and a dyeing treatment with a tensile force being applied to the film in the longitudinal direction by rolls 311, 312, 321 and 322 with different speed ratios. Subsequently, the film that has been subjected to the swelling treatment and the dyeing treatment is immersed in a first crosslinking bath 330 and a second crosslinking bath 340 that contain an aqueous solution of potassium iodide and boric acid and is subjected a crosslinking treatment and a final stretching treatment with a tensile force being applied to the film in the longitudinal direction by rolls 331, 332, 341 and 342 with different speed ratios. The film that has been subjected to the crosslinking treatment is immersed in a washing bath 350 containing pure water by rolls 351 and 352, thus being subjected to a washing treatment. The film that has been subjected to the washing treatment is dried by drying means 360, whereby the water content thereof is adjusted to be in the range from, e.g., 10% to 30%. The film then is wound up by a wind-up portion 380. A polarizer 370 can be obtained by stretching the polymer film (the raw film) to 5 to 7 times its original length, for example.

The amount of iodine added to the dye bath preferably is in the range from 0.01 to 0.15 parts by weight, more preferably from 0.01 to 0.05 parts by weight, with respect to 100 parts by weight of water. When the amount of iodine added to the dye bath is increased, then, a polarizing plate with a low transmittance can be obtained. When the amount of iodine added to the dye bath is decreased, then, a polarizing plate with a high transmittance can be obtained.

The amount of potassium iodide added to the dye bath preferably 0.05 to 0.5 parts by weight with respect to 100 parts by weight of water. By setting the amount of potassium iodide added to the dye bath in the above-described range, it is possible to obtain a polarizing plate having a transmittance in a more preferable range and a still higher polarization ratio. More preferably, the amount of potassium iodide added to the dye bath is in the range from 0.1 to 0.3 parts by weight.

The amount of potassium iodide added to the first crosslinking bath and the second crosslinking bath preferably is in the range from 0.5 to 10 parts by weight with respect to 100 parts by weight of water. The amount of boric acid added to the first crosslinking bath and the second crosslinking bath preferably is in the range from 0.5 to 10 parts by weight with respect to 100 parts by weight of water. By setting the amounts of potassium iodide and boric acid added to the first crosslinking bath and the second crosslinking bath in the above-described ranges, it is possible to obtain a polarizing plate having a transmittance in a more preferable range and a still higher polarization ratio. It is more preferable that the amount of potassium iodide added to the first crosslinking bath and the second crosslinking bath is in the range from 1 to 7 parts by weight. It is more preferable that the amount of boric acid added to the first crosslinking bath and the second crosslinking bath is in the range from 1 to 7 parts by weight.

### [E. First retardation layer]

In the present invention, the "retardation layer" refers to a transparent layer having retardation in at least one of the in-plane direction and the thickness direction. The index ellipsoid of the first retardation layer has the relationship of nx > ny ≥ nz. In the present invention, "having the relationship of nx > ny ≥ nz" means having the relationship of nx > ny = nz (positive uniaxiality) or having the relationship of nx > ny > nz (negative biaxiality). The first retardation layer may be a single layer having retardation or may be a laminate of a plurality of layers. The thickness of the first retardation layer preferably is in the range from 0.5 to 200 µm. The transmittance (T[590]) of the first retardation layer at a wavelength of 590 nm preferably is at least 90%.

It is preferable that the retardation value of the first retardation layer at a wavelength of 590 nm in at least one of the in-plane direction and the thickness direction is at least 100 nm.

Re₁[590] of the first retardation layer is, for example, at least 10 nm, preferably is in the range from 50 to 200 nm. When the index ellipsoid of the first retardation layer has the relationship of nx > ny = nz, it is preferable that Re₁[590] is in the range from 90 to 190 nm. When the index ellipsoid of the first retardation layer has the relationship of nx > ny > nz (negative biaxiality), it is preferable that Re₁[590] is in the range from 70 to 170 nm. By setting Re₁[590] in the above-described range, it is possible to obtain a liquid crystal panel having a still higher contrast ratio in the front direction. When the index ellipsoid of the first retardation layer has the relationship of nx > ny = nz (positive uniaxiality), it is more preferable that Re₁[590] is in the range from 110 to 170 nm. When the index ellipsoid of the first retardation layer has the relationship of nx > ny > nz (negative biaxiality), it is more preferable that Re₁[590] is in the range from 90 to 150 nm.

Rth₁[590] of the first retardation layer can be determined as appropriate. In general, when the index ellipsoid of the first retardation layer has the relationship of nx > ny = nz (positive uniaxiality), Re₁[590] and Rth₁[590] are substantially the same. In this case, the first retardation layer preferably satisfies the equation: |Rth₁[590] - Re₁[590]| < 10 nm.

As described above, it is preferable that the index ellipsoid of the first retardation layer has the relationship of nx > ny > nz (negative biaxiality). When the first retardation layer has the negative biaxiality, it is possible to obtain a liquid crystal panel that has a high contrast ratio in the front direction and also has a high contrast ratio in the oblique direction.

When the index ellipsoid of the first retardation layer has the relationship of nx > ny > nz (negative biaxiality), Rth₁[590] is greater than Re₁[590]. In this case, the difference between Rth₁[590] and Re₁[590] (Rth₁[590] - Re₁[590]) preferably is in the range from 10 to 100 nm. By setting Rth₁[590] in the above-described range, it is possible to obtain a liquid crystal panel having a still higher contrast ratio in the oblique direction. More preferably, the difference (Rthi[590] - Re₁[590]) is in the range from 20 to 80 nm.

The Nz coefficient of the first retardation layer at a wavelength of 590 nm can be set as appropriate. When the index ellipsoid of the first retardation layer has the relationship of nx > ny = nz (positive uniaxiality), it is preferable that the Nz coefficient is more than 0.9 and less than 1.1.

When the index ellipsoid of the first retardation layer has the relationship of nx > ny > nz (negative biaxiality), the Nz coefficient preferably is in the range from 1.1 to 3.0. By setting the Nz coefficient in the above-described range, it is possible to obtain a liquid crystal panel having a still higher contrast ratio in the oblique direction. When the index ellipsoid of the first retardation layer has the relationship of nx > ny > nz (negative biaxiality), it is more preferable that the Nz coefficient is in the range from 1.1 to 2.0, still more preferably from 1.1 to 1.5.

As a material for forming the first retardation layer, it is possible to employ any suitable material as long as the index ellipsoid has the relationship of nx > ny ≥ nz. As the first retardation layer, a retardation film containing a thermoplastic resin such as a norbornene resin, a polycarbonate resin, a cellulose resin, or a polyester resin is used, for example. The retardation film preferably contains 60 to 100 parts by weight of the thermoplastic resin with respect to 100 parts by weight of the total solid.

Preferably, the first retardation layer is a retardation film (A) containing the norbornene resin. The norbornene resin is characterized in that the absolute value of the photoelastic coefficient (C[λ], where λ can be set to 590 nm, for example) is small. In the present invention, the "norbornene resin" refers to a (co)polymer obtained by using a norbornene monomer having a norbornene ring as part or whole of the starting material (a monomer). The term "(co)polymer" means a homopolymer or a copolymer.

The absolute value (C[590]) of the photoelastic coefficient of the norbornene resin at a wavelength of 590 nm preferably is in the range from 1 × 10⁻¹² m²/N to 1 × 10⁻¹¹ m²/N. By using the retardation film in which the absolute value of the photoelastic coefficient is in the above-described range, it is possible to obtain a liquid crystal panel in which optical irregularities are still smaller.

As the starting material of the norbornene resin, a norbornene monomer having a norbornene ring (which is a norbornane ring having a double bond) is used. When the norbornene resin is in the form of (co)polymer, the norbornane ring may or may not be present in the constitutional unit. Examples of the norbornene resin having a norbornane ring in the constitutional unit when it is in the form of (co)polymer include tetracyclo[4.4.1^{2,5}.1^{7,10}.0]dec-3-en, 8-methyl tetracyclo[4.4.1^{2,5}.1^{7,10}.0]dec-3-en, and 8-methoxycarbonyl tetracyclo[4.4.1^{2,5}.1^{7,10}.0]dec-3-en. Examples of the norbornene resin not having a norbornane ring in the constitutional unit when it is in the form of (co)polymer include (co)polymers obtained by using a monomer that turns to a 5-membered ring upon cleavage. Examples of the monomer that turns to a 5-membered ring upon cleavage include norbornene, dicyclopentadiene, 5-phenyl norbornene, and derivatives thereof. When the norbornene resin is a copolymer, the alignment state of its molecules is not particularly limited, and the copolymer may be a random copolymer, a block copolymer, or a graft copolymer.

Examples of the norbornene resin include: (a) a resin obtained by hydrogenating a ring-opening (co)polymer of a norbornene monomer; and (b) a resin obtained through addition (co)polymerization of a norbornene monomer. The resin obtained by hydrogenating a ring-opening copolymer of a norbornene monomer includes a resin obtained by hydrogenating a ring-opening copolymer of at least one kind of norbornene monomer with at least one selected from α-olefins, cycloalkenes, and unconjugated dienes. The resin obtained through addition copolymerization of a norbornene monomer includes a resin obtained through addition copolymerization of at least one kind norbornene monomer with at least one selected from α-olefins, cycloalkenes, and unconjugated dienes.

The resin obtained by hydrogenating a ring-opening (co)polymer of a norbornene monomer can be obtained by, for example, obtaining a ring-opening (co)polymer by causing a metathesis reaction of the norbornene monomer or the like and then hydrogenating the ring-opening (co)polymer. Specifically, this can be achieved by a method described in paragraphs [0059] and [0060] of JP 11(1999)-116780 A, a method described in paragraphs [0035] to [0037] of JP 2001-350017 A, etc., for example. The resin obtained through addition (co)polymerization of a norbornene monomer can be obtained by a method described in Example 1 of JP 61(1986)-292601 A, for example.

With regard to the weight-average molecular weight (Mw) of the norbornene resin, it is preferable that the measured value obtained by gel permeation chromatography (polystyrene standard) using a tetrahydrofuran solvent is in the range from 20000 to 500000. The glass transition temperature (Tg) of the norbornene resin preferably is in the range from 120°C to 170°C. With the use of the above-described resin, it is possible to obtain a retardation film with a still higher thermal stability and still higher stretchability. The glass transition temperature (Tg) is a value calculated by a DSC method according to JIS K 7121, for example.

The retardation film (A) containing the norbornene resin can be obtained by any suitable processing method. Preferably, the retardation film (A) containing the norbornene resin is produced by stretching a polymer film, which has been formed into a sheet-like shape by a solvent casting method or a melt extrusion method, by a longitudinal uniaxial stretching method, a transverse uniaxial stretching method, a longitudinal-transverse simultaneous biaxial stretching method, or a longitudinal-transverse sequential biaxial stretching method. It is preferable that the stretching method is the transverse uniaxial stretching method. This is because, according to the transverse uniaxial stretching method, it becomes possible to produce a polarizing plate in which the slow axis of the retardation film (A) is orthogonal to the absorption axis of the polarizer successively by roll-to-roll processing, so that the productivity of such a polarizing plate can be improved significantly. That is, the polarizer generally is produced by stretching a material for forming the polarizer in the longitudinal direction between a plurality of rolls. In this process, if the retardation film (A) is produced by the transverse uniaxial stretching method, a polarizing plate in which the slow axis of the retardation film (A) is orthogonal to the absorption axis of the polarizer can be obtained by performing the lamination of the retardation film (A) and the polarizer successively in the same direction. As a result, the manufacturing efficiency of such a polarizing plate can be improved. The temperature at which the polymer film is stretched (the stretching temperature) preferably is in the range from 120°C to 200°C. The ratio at which the polymer film is stretched (the stretch ratio) preferably is more than 1 and not more than 4 times.

The stretching method preferably is a fixed-end stretching method because a retardation film with an index ellipsoid having the relationship of nx > ny > nz (negative biaxiality) can be obtained easily by this method. It is to be noted, however, the present invention is not limited thereto. The stretching method may be a free-end stretching method.

As the retardation film (A) containing the norbornene resin, it is possible to use a commercially available film as it is, for example. Alternatively, it is possible to use the commercially available film that has been subjected to secondary processing, e.g., at least one of a stretching treatment and a shrinking treatment. Examples of the commercially available retardation film (A) containing the norbornene resin include "ARTON series (trade name)" (ARTON F, ARTON FX, ARTON D) manufactured by JSR Corporation and "ZEONOR series (trade name)" (ZEONOR ZF14, ZEONOR ZF15, ZEONOR ZF16) manufactured by OPTES INC.

The retardation film used as the first retardation layer may further contain any suitable additive. Examples of the additive include plasticizers, thermostabilizers, light stabilizers, lubricants, antioxidants, UV absorbers, flame retardants, colorants, antistatic agents, compatibilizers, crosslinking agents, and thickeners. The content of the additive preferably is more than 0 and not more than 10 parts by weight with respect to 100 parts by weight of the resin as a main component.

### [F. Lamination of first polarizer and first retardation layer]

The first polarizer and the first retardation layer are laminated preferably via an adhesive layer. In the example shown in FIG. 1, the first polarizer 21 and the first retardation layer 31 are laminated via an adhesive layer.

The surface of the first retardation layer to be adhered to the first polarizer preferably is subjected to an adhesion-improving treatment. It is preferable that the adhesion-improving treatment is a treatment of coating a resin material onto the surface. As the resin material, silicon resins, urethane resins, and acrylic resins are preferable. By performing the adhesion-improving treatment, an adhesion-improving layer is formed on the adhesion surface. The thickness of the adhesion-improving layer preferably is in the range from 5 to 100 nm, more preferably from 10 to 80 nm.

The adhesive layer may be provided on either the first polarizer side or the first retardation layer side, or on both the first polarizer side and the first retardation layer side.

When the adhesive layer is a pressure-sensitive adhesive layer formed of a pressure-sensitive adhesive, it is possible to employ any suitable pressure-sensitive adhesive as the pressure-sensitive adhesive. Specifically, examples of the pressure-sensitive adhesive include solvent-type pressure-sensitive adhesives, nonaqueous emulsion-type pressure-sensitive adhesives, aqueous pressure-sensitive adhesives, and hot-melt pressure-sensitive adhesive. Among these, a solvent-type pressure-sensitive adhesive containing an acrylic polymer as a base polymer preferably is used. This is because the pressure-sensitive adhesive layer formed of such a solvent-type pressure-sensitive adhesives exhibits appropriate sticking characteristics (e.g., wettability, cohesiveness, and adhesiveness) with respect to the first polarizer and the first retardation layer and is excellent in optical transparency, weather resistance, and heat resistance.

The thickness of the pressure-sensitive adhesive layer can be set as appropriate depending on the purpose of using the layer, adhesion strength, etc. Specifically, the thickness of the pressure-sensitive adhesive layer preferably is in the range from 1 to 100 µm, more preferably from 3 to 50 µm, still more preferably from 5 to 30 µm, and particularly preferably 10 to 25 µm.

The adhesive layer may be formed by, for example, coating a coating solution containing an adhesive in a predetermined proportion onto a surface of at least one of the first retardation layer and the first polarizer and then drying it. As a method of preparing the coating solution, any suitable method can be employed. As the coating solution, for example, a commercially available solution or dispersion may be used, a mixture obtained by further adding a solvent to a commercially available solution or dispersion may be used, or a mixture obtained by dissolving or dispersing a solid in a solvent of various types may be used.

As the adhesive, an adhesive having any suitable property, form, and adhesion mechanism can be used depending on the purpose of using it. Specifically, examples of the adhesive include water-soluble adhesives, emulsion-type adhesives, latex-type adhesives, mastic adhesives, multilayer adhesives, paste-form adhesives, foaming-type adhesives, supported film adhesives, thermoplastic adhesives, thermofusible adhesives, heat solidified-type adhesives, hot-melt adhesives, heat activated-type adhesives, heat-sealing adhesives, thermosetting adhesives, contact-type adhesives, pressure-sensitive adhesives, polymerization-type adhesives, solvent-type adhesives, and solvent activated-type adhesives. Among these, water-soluble adhesives are preferable, because they are excellent in transparency, adhesiveness, and operability, and can impart excellent quality and cost efficiency to a product.

The water-soluble adhesive may contain at least one of a water-soluble naturally-occurring polymer and a water-soluble synthetic polymer, for example. Examples of the naturally-occurring polymer include proteins and starches. Examples of the synthetic polymer include resole resins, urea resins, melamine resins, polyethylene oxide, polyacrylamide, polyvinyl pyrrolidone, acrylic ester, methacrylic ester, and polyvinyl alcohol resins. Among these, a water-soluble adhesive that contains a polyvinyl alcohol resin is used preferably, and a water-soluble adhesive that contains a modified polyvinyl alcohol resin containing an acetoacetyl group (an acetoacetyl group-containing polyvinyl alcohol resin) is used more preferably. This is because such an adhesive achieves particularly excellent adhesiveness to the first polarizer and also achieves excellent adhesiveness to the first retardation layer. Examples of the acetoacetyl group-containing polyvinyl alcohol resin include "GOHSENOL Z series (trade name)" manufactured by Nippon Synthetic Chemical Industry Co., Ltd., "GOHSENOL NH series (trade name)" manufactured by the same, and "GOHSEFIMER Z series (trade name)" manufactured by the same.

Examples of the polyvinyl alcohol resin include a saponified product of polyvinyl acetate, derivatives of the saponified product, saponified products of copolymers of monomers that can copolymerize with vinyl acetate, and modified polyvinyl alcohols obtained through acetalization, urethanization, etherification, grafting, phosphorylation, etc. of polyvinyl alcohols. Examples of the monomer include unsaturated carboxylic acids such as maleic acid, maleic anhydride, fumaric acid, crotonic acid, itaconic acid, acrylic acid, and methacrylic acid, and esters thereof, α-olefins such as ethylene and propylene, allylsulfonate, methallylsulfonate, sodium allylsulfonate, sodium methallylsulfonate, sodium sulfonate, sodium sulfonate monoalkyl malate, sodium disulfonate alkyl malate, N-methylol acrylamide, acrylamide alkyl sulfonate alkali salt, N-vinyl pyrrolidone, and derivatives of N-vinyl pyrrolidone. These resins may be used alone or in combination of at least two kinds thereof.

The average polymerization degree of the polyvinyl alcohol resin preferably is in the range from 100 to 5000, more preferably from 1000 to 4000 from the viewpoint of adhesiveness. The average saponification degree of the polyvinyl alcohol resin preferably is in the range from 85 to 100 mol%, more preferably from 90 to 100 mol% from the viewpoint of adhesiveness.

The acetoacetyl group-containing polyvinyl alcohol resin can be obtained by reacting a polyvinyl alcohol resin with diketene by any method, for example. Specifically, this can be achieved by: adding diketene to a dispersion obtained by dispersing the polyvinyl alcohol resin in a solvent such as acetic acid; by adding diketene to a solution obtained by dissolving the polyvinyl alcohol resin in a solvent such as dimethylformamide or dioxane; or by bringing diketene gas or liquid diketene into contact with the polyvinyl alcohol resin directly, for example.

The modification degree of the acetoacetyl group-containing polyvinyl alcohol resin with an acetoacetyl group is at least 0.1. mol%, for instance. By setting the acetyl group modification degree in above-described range, it is possible to obtain a liquid crystal panel with still higher water resistance. The modification degree with the above-described acetyl group preferably is in the range from 0.1 to 40 mol%, more preferably from 1 to 20 mol%, and still more preferably from 2 to 7 mol%. The modification degree with the above-described acetyl group is a value measured by nuclear magnetic resonance (NMR), for example.

The water-soluble adhesive containing the polyvinyl alcohol resin may further contain a crosslinking agent. This is because this can improve the water resistance still further. As the crosslinking agent, any suitable crosslinking agent can be employed. Preferably, the crosslinking agent is a compound having at least two functional groups reactive with the polyvinyl alcohol resin. Examples of the crosslinking agent include: alkylene diamines having an alkylene group and two amino groups, such as ethylene diamine, triethylene diamine, and hexamethylene diamine; isocyanates such as tolylene diisocyanate, hydrogenated tolylene diisocyanate, trimethylolpropane tolylene diisocyanate adducts, triphenylmethane triisocyanate, methylene bis(4-phenyl)methane triisocyanate, isophorone diisocyanate, and ketoxime-blocked products or phenol-blocked products thereof, epoxies such as ethylene glycol diglycidyl ether, polyethylene glycol diglycidyl ether, glycerin diglycidyl ether, glycerin tridiglycidyl ether, 1,6-hexane diol diglycidyl ether, trimethylolpropane tridiglycidyl ether, diglycidyl aniline, and diglycidylamine; monoaldehydes such as formaldehyde, acetaldehyde, propionaldehyde, and butylaldehyde; dialdehydes such as glyoxal, malondialdehyde, succindialdehyde, glutardialdehyde, maleindialdehyde, and phthaldialdehyde; amino-formaldehyde resins such as methylol urea, methylol melamine, alkylated methylol urea, alkylated methylolated melamine, acetoguanamine, and condensation products of benzoguanamine with formaldehyde; salts of divalent metals or trivalent metals such as sodium, potassium, magnesium, calcium, aluminum, iron, and nickel, and oxides thereof. Among these, amino-formaldehyde resins and dialdehydes are preferable. As the amino-formaldehyde resins, compounds having a methylol group are preferable. As the dialdehyde, glyoxal is preferable. Among the above-noted materials, compounds having a methylol group are preferable, and methylol melamine is particularly preferable. Examples of the aldehyde compound include "glyoxal (trade name)" available from Nippon Synthetic Chemical Industry Co., Ltd. and "Sequarez 755 (trade name)" available from OMNOVA. Examples of the amine compound include "m-xylylenediamine (trade name)" available from Mitsubishi Gas ChemicalCo., Inc. Examples of the methylol compound include "WATERSOL series (trade name)" available from Dainippon Ink and Chemicals, Inc.

The amount of the crosslinking agent to be blended is, for example, is in the range from 1 to 60 parts by weight with respect to 100 parts by weight of the polyvinyl alcohol resin (preferably, the acetoacetyl group-containing polyvinyl alcohol resin). By setting the blended amount in the above-described range, it is possible to form an adhesive layer that is excellent in transparency, adhesiveness, and water resistance. The upper limit of the blended amount preferably is 50 parts by weight, more preferably 30 parts by weight, still more preferably 15 parts by weight, particularly preferably 10 parts by weight, and most preferably 7 parts by weight. The lower limit of the blended amount preferably is 5 parts by weight, more preferably 10 parts by weight, and still more preferably 20 parts by weight. Note here that, by using a metal compound colloid that will be described later in combination, it is possible to further improve the stability in the case where the blended amount of the crosslinking agent is large.

The water-soluble adhesive containing the polyvinyl alcohol resin may further contain a metal compound colloid. The metal compound colloid may be made up of, for example, metal oxide fine particles dispersed in a dispersion medium, and may be stabilized electrostatically owing to mutual repulsion of the same type of electric charge of the fine particles so that it remains stabile permanently. The average particle diameter of the fine particles composing the metal compound is not particularly limited, and preferably is in the range from 1 to 100 nm, more preferably from 1 to 50 nm. This is because this allows the fine particles to be dispersed uniformly in the adhesive layer to ensure adhesiveness and also allows the formation of nicks to be suppressed. Note here that the "nicks" refers to defective local irregularities formed at the interface between the polarizer and the protective layer. The presence or absence of the nicks can be checked by a method described later in the examples, for instance.

As the metal compound, any suitable compound can be employed. Examples of the metal compound include metal oxides such as alumina, silica, zirconia, and titania, metal salts such as aluminum silicate, calcium carbonate, magnesium silicate, zinc carbonate, barium carbonate, and calcium phosphate, and minerals such as cerite, talc, clay, and kaoline. Among these, alumina is preferable.

The metal compound colloid is present in the state of a colloid solution in which the metal compound is dispersed in a dispersion medium, for example. Examples of the dispersion medium include water and alcohols. The solid content in the colloid solution is in the range from 1 to 50 wt%, for example. The colloid solution may contain an acid such as nitric acid, hydrochloric acid, and acetic acid as a stabilizer.

The blended amount of the metal compound colloid (the solid) preferably not more than 200 parts by weight with respect to 100 parts by weight of the polyvinyl alcohol resin. By setting the blended amount in the above-described range, the formation of nicks can be suppressed more favorably while maintaining the adhesiveness. It is more preferable that the blended amount is in the range from 10 to 200 parts by weight, still more preferably from 20 to 175 parts by weight, and particularly preferably from 30 to 150 parts by weight.

As a method of preparing the adhesive, any suitable method can be employed. For example, in the case of the adhesive containing the metal compound colloid, the method can be such that the polyvinyl alcohol resin and the crosslinking agent are mixed together beforehand, the concentration of the mixture is adjusted to a suitable value, and then the metal compound colloid is blended into the mixture, for example. Also, it is possible to mix the polyvinyl alcohol resin and the metal compound colloid and then add the crosslinking agent to the mixture considering the time when it is used, etc.

The resin concentration in the adhesive preferably is in the range from 0.1 to 15 wt%, more preferably from 0.5 to 10 wt%, from the viewpoint of the coatability, the stability when being left, etc.

The pH of the adhesive preferably is in the range from 2 to 6, more preferably from 2.5 to 5, still more preferably from 3 to 5, and particularly preferably from 3.5 to 4.5. Generally, the surface charge of the metal compound colloid can be controlled by adjusting the pH of the adhesive. The surface charge preferably is positive charge. When the surface charge is positive charge, it is possible to suppress the formation of nicks more favorably, for example.

The total solid content in the adhesive varies depending on the solubility, coating viscosity, and wettability of the adhesive, the desired thickness of the adhesive layer, etc. The total solid content preferably is in the range from 2 to 100 parts by weight with respect to 100 parts by weight of the solvent. By setting the total solid concentration in the above-described range, it is possible to obtain an adhesive layer with still higher surface uniformity. It is more preferable that the solid content is in the range from 10 to 50 parts by weight, still more preferably from 20 to 40 parts by weight.

The viscosity of the adhesive is not particularly limited, but preferably is in the range from 1 to 50 mPa.s when measured at a shear rate of 1000(1/s) at 23°C. By setting the viscosity of the adhesive in the above-described range, it is possible to obtain an adhesive layer with still higher surface uniformity. It is more preferable that the viscosity of the adhesive is in the range from 2 to 30 mPa·s, still more preferably from 4 to 20 mPa·s.

The glass transition temperature (Tg) of the adhesive is not particularly limited, and preferably is in the range from 20°C to 120°C, more preferably from 40°C to 100°C, and still more preferably from 50°C to 90°C. The glass transition temperature can be measured by a differential scanning calorimetry (DSC) measurement according to JIS K 7127 (1987 version), for example.

The adhesive may further contain a coupling agent such as a silane coupling agent or a titanium coupling agent, a tackifier of various types, an UV absorber, an antioxidant, a stabilizer such as a stabilizer for imparting heat resistance or a stabilizer for imparting hydrolysis resistance.

As a method of coating the adhesive, any suitable method can be employed. Examples of the coating method include spin coating, roller coating, flow coating, dip coating, and bar coating.

The thickness of the adhesive layer is not particularly limited, and preferably is in the range from 0.01 to 0.15 µm. By setting the thickness of the adhesive layer in the above-described range, it is possible to obtain a polarizing plate with excellent durability, in which peeling or lifting of the polarizer does not occur even when subjected to a high temperature and high humidity environment. It is more preferable that the thickness of the adhesive layer is in the range from 0.02 to 0.12 µm, still more preferably from 0.03 to 0.09 µm.

### [G. Second retardation layer]

The index ellipsoid of the second retardation layer has the relationship of nx = ny > nz (negative uniaxiality). The second retardation layer may be a single layer having retardation or may be a laminate of a plurality of layers. The thickness of the second retardation layer preferably is in the range from 0.5 to 200 µm. The transmittance (T[590]) of the second retardation layer at a wavelength of 590 nm preferably is at least 90%.

Re₂[590] of the second retardation layer is less than 10 nm, for example. By setting Re₂[590] in the above-described range, it is possible to obtain a liquid crystal panel having a still higher contrast ratio in the front direction. Re₂[590] preferably is 5 nm or less, more preferably 3 nm or less.

Rth₂[590] of the second retardation layer can be set as appropriate depending on the retardation value in the thickness direction of the liquid crystal cell, etc., for example. Rth₂[590] preferably is in the range from 100 to 400 nm. By setting Rth₂[590] in the above-described range, it is possible to obtain a liquid crystal panel with a still higher front contrast ratio. More preferably, Rth₂[590] is in the range from 120 to 350 nm, still more preferably from 150 to 300 nm.

As the material of the second retardation layer, any suitable material can be employed as long as the index ellipsoid has the relationship of nx = ny > nz (negative uniaxiality). As the material, it is possible to employ: poly(4,4'-hexafluoroisopropylidene-bisphenol)terephthalate-co-isophthalates poly(4,4'-hexahydro-4,7-methanoindan-5-ylidene-bisphenol)terephthalate; poly(4,4'-isopropylidene-2,2',6,6'-tetrachlorobisphenol)terephthalate-co-isophthalate; poly(4,4'-hexafluoroisopropylidene)-bisphenol-co-(2morbornylidene)-bisphenol terephthalate; poly(4,4'-hexahydro-4,7-methanoindene-5-ylidene)-bisphenol-co-(4,4'-isopropylidene-2,2',6,6'-tetrabromo)-bisphenol terephthalate; poly(4,4'-isopropyh.dene-bisphenol-co-4,4'-(2-norbornylidene)bisphenol) terephthalate-co-isophthalate; and copolymers thereof. They may be used alone or in combination of at least two kinds thereof.

As the second retardation layer, it is possible to use, for example, a retardation film containing a thermoplastic resin such as a polyimide resin, a cellulose resin, a norbornene resin, a polycarbonate resin, or a polyamide resin. Such a retardation film preferably contains 60 to 100 parts by weight of the thermoplastic resin with respect to 100 parts by weight of the total solid.

Preferably, the second retardation layer is any one of a retardation film (B1) containing a polyimide resin, a retardation film (B2) containing a cellulose resin, and a laminate (C) of the retardation film (B1) and the retardation film (B2). It is preferable that the laminate (C) is obtained by joining the retardation film (B1) to the retardation film (B2) via an adhesive layer or by forming the retardation film (B1) directly on the surface of the retardation film (B2) by welding or the like.

### [Polyimide resin]

When the polyimide resin is formed into a sheet-like shape by a solvent casting method, molecules are apt to align spontaneously during the evaporating process of the solvent, so that the retardation film with an index ellipsoid having the relationship of nx = ny > nz (negative uniaxiality) can be made very thin. The thickness of the retardation film (B1) containing the polyimide resin preferably is in the range from 0.5 to 10 µm, more preferably from 1 to 5 µm. The birefringence (Δn_{xz}[590]) of the retardation film (B1) in the thickness direction preferably is in the range from 0.01 to 0.12, more preferably from 0.02 to 0.08. Such a polyimide resin can be obtained by the method described in U.S. Patent No. 5,344,916, for example.

Preferably, the polyimide resin has at least one of a hexafluoroisopropylidene group and a trifluoromethyl group. More preferably, the polyimide resin has at least a repeating unit represented by the following general formula (I) or a repeating unit represented by the following general formula (II). The polyimide resin containing any of these repeating units exhibits excellent solubility in a general-purpose solvent, and thus can be formed into a film by a solvent casting method. Furthermore, it is possible to form a thin layer of the polyimide resin even on a base with poor solvent resistance, such as triacetyl cellulose film, without corroding the surface of the base too much.

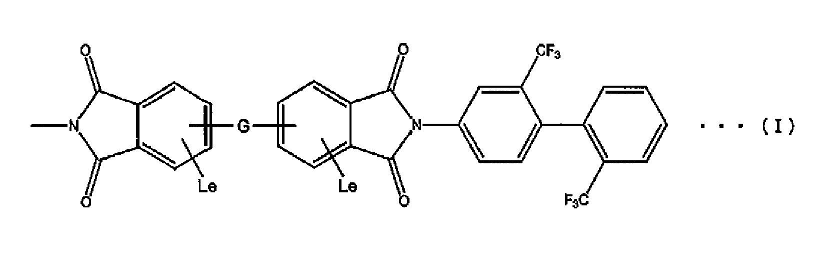

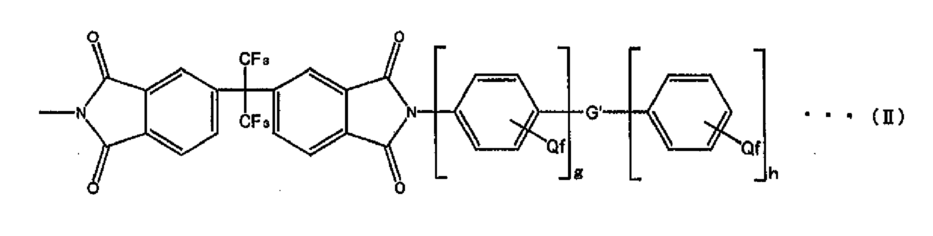

In the above general formulae (I) and (II), G and G' each are a group selected independently from the group consisting of a covalent bond, a CH₂ group, a C(CH₃)₂ group, a C(CF₃)₂ group, a C(CX₃)₂ group (where X is halogen), a CO group, an O atom, an S atom, an SO₂ group, an Si(CH₂CH₃)₂ group, and an N(CH₃) group, and G and G' may be the same or different.

In the above general formula (I), L is a substituent, and e indicates the number of substitutions therein. L is, for example, halogen, an alkyl group with a carbon number of 1 to 3, a halogenated alkyl group with a carbon number of 1 to 3, a phenyl group, or a substituted phenyl group, and when there are plural Ls, they may be the same or different. Furthermore, e is an integer from 0 to 3.

In the above general formula (II), Q is a substituent, and f indicates the number of substitutions therein. Q may be, for example, an atom or a group selected from the group consisting of hydrogen, halogen, an alkyl group, a substituted alkyl group, a nitro group, a cyano group, a thioalkyl group, an alkoxy group, an aryl group, a substituted aryl group, an alkyl ester group, and a substituted alkyl ester group and, when there are plural Qs, they may be the same or different. Furthermore, f is an integer from 0 to 4, and g and h each are an integer from 1 to 3.

The polyimide resin can be obtained through a reaction between tetracarboxylic dianhydride and diamine, for example. The repeating unit of the general formula (I) can be obtained by, for example, using 2,2'-bis(trifluoromethyl)-4,4'-diaminobiphenyl as diamine and reacting this diamine with tetracarboxylic dianhydride having at least two aromatic rings. The repeating unit of the formula (II) can be obtained by, for example, using 2,2-bis(3,4-dicarboxyphenyl)hexafluoropropane dianhydride as tetracarboxylic dianhydride and reacting this tetracarboxylic dianhydride with diamine having at least two aromatic rings. The reaction may be chemical imidization that proceeds in two stages or may be thermal imidization that proceeds in a single stage, for example.

As the tetracarboxylic dianhydride, any suitable tetracarboxylic dianhydride can be selected. Examples of the tetracarboxylic dianhydride include:
2,2-bis(3,4-dicarboxyphenyl)hexafluoropropane dianhydride;
3,3',4,4'-benzophenone tetracarboxylic dianhydride;
2,3,3',4-benzophenone tetracarboxylic dianhydride;
2,2',3,3'-benzophenone tetracarboxylic dianhydride;
2,2'-dibromo-4,4',5,5'-biphenyl tetracarboxylic dianhydride;
2,2'-bis(trifluoromethyl)-4,4',5,5'-biphenyl tetracarboxylic dianhydride;
3,3',4,4'-biphenyl tetracarboxylic dianhydride;
4,4'-bis(3,4-dicarboxyphenyl)ether dianhydride;
4,4'-oxydiphthalic dianhydride;
4,4'-bis(3,4-dicarboxyphenyl)sulfonic dianhydride;
bis(2,3-dicarboxyphenyl)methanoic dianhydride; and
bis(3,4-dicarboxyphenyl)diethylsilane dianhydride.

As the diamine, any suitable diamine can be selected. Examples of the diamine include:
2,2'-bis(trifluoromethyl)-4,4'-diaminobiphenyl;
4,4'-diaminobiphenyl;
4,4'-diaminophenylmethane;
4,4'-(9-fluorenylidene)-dianiline;
3,3'-dichloro-4,4'-diaminophenylmethane;
2,2'-dichloro-4,4'-diaminobiphenyl;
4,4'-diaminophenylether;
3,4'-diaminodiphenylether;
4,4'-diaminodiphenylsulfone; and
4,4'-diaminodiphenylthioether.

The weight-average molecular weight (Mw) of the polyimide resin, which is determined based on a polyethylene oxide standard using as a developing solvent a dimethylformamide solution (10 mM lithium bromide and 10 mM phosphoric acid was added up to the standard mark on a measuring flask to prepare 11 of dimethylformamide solution) preferably is in the range from 20000 to 180000. Preferably, the polyimide resin has an imidization ratio of at least 95%. The imidization ratio of the polyimide resin can be determined based on the integral intensity ratio between a proton peak derived from polyamic acid as a precursor of polyimide and a proton peak derived from polyimide, for example.

The retardation film (B1) containing the polyimide resin can be obtained by any suitable processing method. Preferably, the retardation film (B1) is produced by being formed into a sheet-like shape by a solvent casting method.

### [Cellulose resin]

As the cellulose resin, any suitable cellulose resin can be employed. Preferably, the cellulose resin is cellulose organic acid ester or cellulose-mixed organic acid ester in which at least one or all of the hydroxyl groups contained in cellulose are substituted by at least one group selected from an acetyl group, a propionyl group, and a butyl group. Examples of the cellulose organic acid ester include cellulose acetate, cellulose propionate, and cellulose butyrate. Examples of the cellulose-mixed organic acid ester include cellulose acetate propionate and cellulose acetate butyrate. The cellulose resin can be obtained by the method described in the paragraphs **[0040]** and [0041] of JP 2001-188128 A, for example.

The weight-average molecular weight (Mw) of the cellulose resin, which is measured by gel permeation chromatography (with a polystyrene standard) using a tetrahydrofuran solvent, preferably is in the range from 20000 to 1000000. The glass transition temperature (Tg) of the cellulose resin preferably is in the range from 110°C to 185°C. The glass transition temperature (Tg) can be determined by a DSC method according to JIS K 7121. With the use of the above-described resin, it is possible to obtain a retardation film having a still higher thermal stability and a still higher mechanical strength.

The retardation film (B2) containing the cellulose resin can be obtained by any suitable processing method. Preferably, the retardation film (B2) is produced by being formed into a sheet-like shape by a solvent casting method. As the retardation film (B2), it is possible to use a commercially available polymer film containing a cellulose resin as it is, for example. Alternatively, it is possible to use the commercially available film that has been subjected to secondary processing, e.g., at least one of a stretching treatment and a shrinking treatment. Examples of the commercially available film include "FUJITAC series (trade name)" (ZRF80S, TD80UF, TDY-80UL) manufactured by Fuji Photo Film Co., Ltd. and "KC8UX2M (trade name)" manufactured by Konica Minolta Opto, Inc.

The retardation film used as the second retardation layer may further contain any suitable additive. Examples of the additive include plasticizers, thermostabilizers, light stabilizers, lubricants, antioxidants, UV absorbers, flame retardants, colorants, antistatic agents, compatibilizers, crosslinking agents, and thickeners. The content of the additive preferably is more than 0 and not more than 10 parts by weight with respect to 100 parts by weight of the resin as a main component.

In the second retardation layer, a liquid crystalline composition may be used. When the liquid crystalline composition is used, the second retardation layer includes a solidified layer or a cured layer of a liquid crystalline composition containing a rod-shaped liquid crystal compound that is in a planar alignment, or a solidified layer or a cured layer of a liquid crystalline composition containing a discotic liquid crystal compound that is in a columnar alignment. When the liquid crystal compound is used, the birefringence in the thickness direction is great, so that a thin retardation film can be obtained.

The retardation film including a solidified layer or a cured layer of a liquid crystalline composition containing a rod-shaped liquid crystal compound that is in a planar alignment can be obtained by a method described in JP 2003-287623 A, for example. Furthermore, the retardation film including a solidified layer or a cured layer of a liquid crystalline composition containing a discotic liquid crystal compound that is in a columnar alignment can be obtained by the method described in JP 9(1997)-117983 A, for example.

### [H. Lamination of the second polarizer and the second retardation layer]

Lamination of the second polarizer and the second retardation layer can be carried out in the same manner as the lamination of the first polarizer and the first retardation layer.

### [I. Protective layer]

The first protective layer and the second protective layer used in the present invention are provided for the purpose of preventing shrinkage or expansion of the polarizers or deterioration of the polarizers caused by ultraviolet rays, for example. The first protective layer and the second protective layer may be the same or different.

As the first protective layer and the second protective layer, it is possible to employ any suitable layers. The thickness of the protective layer preferably is in the range from 20 to 100 µm. The transmittance (T[590]) of the protective layer at a wavelength of 590 nm preferably is at least 90%.

As a material of the protective layer, it is possible to select any suitable material. Preferably, the protective layer is a polymer film containing a cellulose resin, a norbornene resin, or an acrylic resin. The polymer film containing the cellulose resin can be obtained by the method described in Example 1 of JP 7(1995)-112446 A, for example. The polymer film containing the norbornene resin can be obtained by the method described in JP 2001-350017 A, for example. The polymer film containing an acrylic resin can be obtained by the method described in Example 1 of JP 2004-198952 A, for example.

The protective layer may have a surface treatment layer on the side opposite to the polarizer side. As the surface treatment, a suitable treatment can be employed as appropriate depending on the purpose of performing it. Examples of the surface treatment layer include treatment layers for performing a hard-coat treatment, an antistatic treatment, a treatment for preventing reflection (also referred to as an antireflection treatment), and a diffusion treatment (also referred to as an anti-glare treatment). These surface treatments are used for the purpose of preventing the screen from being contaminated or damaged and also preventing the display screen image from being unable to be seen clearly by reflected glare of a fluorescent lamp in a room or sunlight in the screen. As the surface treatment layer, a layer obtained by fixing a treatment agent for forming the treatment layer on a surface of a base film generally is used. The base film may also serve as the protective layer. Moreover, the surface treatment layer may have a multilayer structure in which a hard-coat treatment layer is laminated on an antistatic treatment layer, for example.

As the protective layer, a surface-treated commercially available polymer film can be used as it is, for example. Alternatively, it is possible to use the commercially available polymer film after subjecting it to any surface treatment. Examples of a commercially available film that has been subjected to the diffusion treatment (the anti-glare treatment) include "AG150, AGS1, and AGS2 (trade name)" manufactured by Nitto Denko Corporation. Examples of a commercially available film that has been subjected to the treatment for preventing reflection (the antireflection treatment) include "ARS, ARC (trade name)" manufactured by Nitto Denko Corporation. Examples of a commercially available film that has been subjected to the hard-coat treatment and the antistatic treatment include "KC8UX-HA (trade name)" manufactured by Konica Minolta Opto, Inc. Examples of a commercially available film that has been subjected to the antireflection treatment include "ReoLook series (trade name)" manufactured by NOF CORPORATION.

### [J. Liquid crystal display]

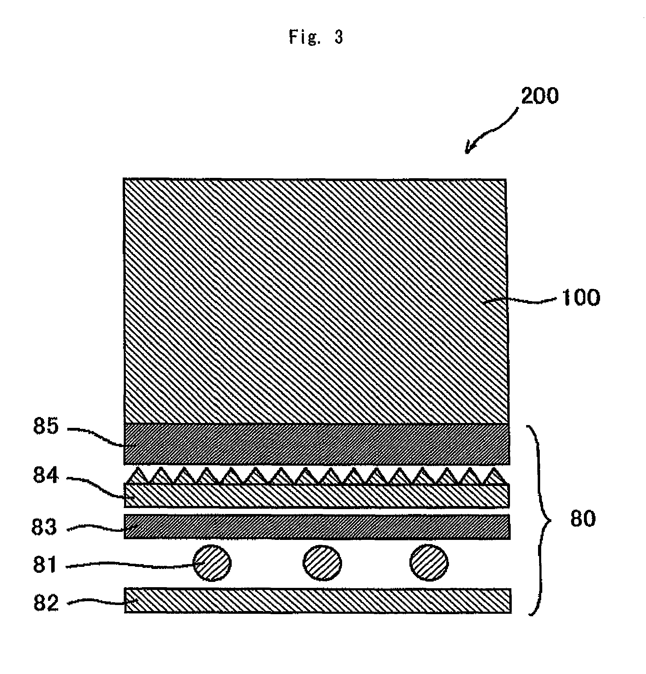

A liquid crystal display of the present invention is characterized in that it includes the liquid crystal panel according to the present invention. FIG. 3 is a schematic sectional view showing the configuration of an example of the liquid crystal display of the present invention. In FIG. 3, the sizes, proportions, etc. of the respective components are different from the actual sizes, proportions, etc, for the sake of simplicity in illustration. As shown in FIG. 3, this liquid crystal display 200 includes at least a liquid crystal panel 100 and a direct-type backlight unit 80 arranged on one side of the liquid crystal panel 100. The direct-type backlight unit 80 includes at least light sources 81, a reflection film 82, a diffusion plate 83, a prism sheet 84, and a brightness enhancement film 85. Although the liquid crystal display 200 according to the present example employs the direct-type backlight unit, the present invention is not limited thereto, and a sidelight-type backlight unit can be used, for example. The sidelight-type backlight unit includes at least a light guide plate and a light reflector, in addition to the configuration of the direct-type backlight unit. Note here that the components shown in FIG. 3 for illustrative purposes can be omitted partially or substituted by another optical element depending on the lighting system of the liquid crystal display, the driving mode of the liquid crystal cell, the intended use, etc. as long as the effect of the present invention can be obtained.

The liquid crystal display of the present invention may be a transmission type liquid crystal display in which the screen is seen by being irradiated with light from the back surface side of the liquid crystal panel, may be a reflection type liquid crystal display in which the screen is seen by being irradiated with light from the display surface side of the liquid crystal panel, or may be a semi-transmission type liquid crystal display having the properties of both the transmission type and the reflection type liquid crystal displays.

### [K. Use of liquid crystal display]

The liquid crystal display of the present invention is applicable to any suitable use. Examples of the use thereof include: office automation equipment such as computer monitors, notebook computers, and copy machines; portable devices such as mobile phones, watches, digital cameras, personal digital assistants (PDAs), and portable game devices; household electric appliances such as video cameras, televisions, and microwave ovens; vehicle-mounted devices such as back monitors, car navigation system monitors, and car audios; exhibition devices such as information monitors for commercial stores; security devices such as surveillance monitors; and nursing care and medical devices such as nursing-care monitors and medical monitors.

Preferably, the liquid crystal display of the present invention is used in a television. The screen size of the television preferably is a wide-screen 17-inch type (373 mm × 224 mm) or larger, more preferably a wide-screen 23-inch type (499 mm × 300 mm) or larger, and still more preferably a wide-screen 32-inch type (687 mm × 412 mm) or larger.

### EXAMPLES

Hereinafter, examples of the present invention will be described together with comparative examples. It is to be noted, however, the present invention is by no means limited to the following examples and comparative examples. Various physical properties and characteristics described in the respective examples and comparative examples were evaluated or measured by the following methods.

### (1) Transmittance of polarizing plate

The transmittance (T) of a polarizing plate was determined by measuring a Y value whose luminous factor had been corrected in view of a two-degree visual field (C light source) according to JIS Z 8701 (1982 version) using a spectrophotometer [Murakami Color Research Laboratory, product name "DOT-3"].

### (2) Content of each element

A circular sample having a diameter of 10 mm was subjected to the measurement under the following conditions to measure X-ray intensities. Based on the thus-measured X-ray intensities, the contents of the respective elements were determined using a calibration curve that had been prepared previously using a standard sample.
- Analyzer: X-ray fluorescence analyzer (XRF) manufactured by Rigaku Industrial Corp., trade name "ZSX100e"
- Anticathode: rhodium
- Excitation light energy: 40kV · 90mA
- Quantitation method: FP method
- Measurement time: 4 seconds

### (3) Retardation values (Re[590], Rth[590]), Nz coefficient, and T[590] at a wavelength of 590 nm

Retardation values (Re[590], Rth[590]) at a wavelength of 590 nm, an Nz coefficient, and T[590] were measured at 23°C using "KOBRA21-ADH (trade name)" manufacture by Oji Scientific Instruments. Note here that an average refractive index was determined by using measured values obtained with the use of an Abbe refractometer (Atago Co., Ltd., product name "DR-M4").

### (4) Thickness

When the thickness was less than 10 µm, it was measured using a spectrophotometer for thin films (Otsuka Electronics Co., Ltd., trade name "Instant multi-photometry system MCPD-2000"). When the thickness was 10 µm or more, it was measured using a digital micrometer "KC-351C" manufactured by Anritsu Corporation.

### (5) Molecular weight of polyimide resin

The molecular weight of the polyimide resin was measured by gel permeation chromatography (GPC) using polystyrene oxide as a standard sample. Specifically, the measurement was carried out using the following apparatus and instruments and under the following measurement conditions.
Measurement sample: The sample was dissolved in an eluent to prepare a 0.1 wt% solution, which was allowed to stand still for 8 hours. Thereafter, the solution was filtered through a 0.45 µm thick membrane filter. The resultant filtrate was used as a measurement sample.
Analyzer: "HLC-8020GPC (trade name)" manufactured by Tosoh Corp. Column: "GMH_{XL}+GMH_{XL}+G2500H_{XL} (trade name)" manufactured by Tosoh Corp.
Column size: each 7.8 mmØ × 30 cm (90 cm in total)
Eluent: dimethylformamide (10 mM lithium bromide and 10 mM phosphoric acid was added up to the standard mark on a measuring flask to prepare 11 of dimethylformamide solution)
Flow rate: 0.8 ml/min
Detector: RI (differential refractometer)
Column temperature: 40°C

### (6) Molecular weight of norbornene resin

The molecular weight of the norbornene resin was measured by gel permeation chromatography (GPC) using polystyrene as a standard sample. Specifically, the measurement was carried out using the following apparatus and instruments and under the following measurement conditions. Measurement sample: The sample was dissolved in an eluent to prepare a 0.1 wt% solution, which was allowed to stand still overnight. Thereafter, the solution was filtered through a 0.45 µm thick membrane filter. The resultant filtrate was used as a measurement sample.
Analyzer: "HLC-8020GPC (trade name)" manufactured by Tosoh Corp.
Column: "TSKgel SuperHM-H/H4000/H3000/H2000 (trade name)" manufactured by Tosoh Corp.
Column size: each 6.0 mm I.D. × 150 mm
Eluent: tetrahydrofuran
Flow rate: 0.6 ml/min
Detector: RI (differential refractometer)
Column temperature: 40°C
Injected amount: 20 µl

### (7) Glass transition temperature (Tg)

The glass transition temperature (Tg) was determined using a differential scanning calorimeter (Seiko Corp., trade name "DSC-6200") by the method according to JIS K 7121 (1987 version) (the measurement method for the transition temperature of plastics). Specifically, the glass transition temperature of 3 mg of a powder sample was measured twice in nitrogen atmosphere (a gas flow rate; 80 ml/min) while raising the temperature (a heating rate: 10°C/min). The data obtained in the second measurement was employed. The calorimeter had been subjected to temperature correction using a standard sample (indium).

### (8) Absolute value (C[590]) of photoelastic coefficient at a wavelength of 590 nm

The absolute value (C[590]) of the photoelastic coefficient at a wavelength of 590 nm was determined in the following manner. While applying a stress (5 to 15 N) to a sample (with a size of 2 cm × 10 cm) with both ends of the sample being held, the retardation value (23°C /at a wavelength of 590 nm) at the center of the sample was measured using a spectroscopic ellipsometer (JASCO Corporation, trade name "M-220"). The absolute value (C[590]) was calculated based on the slope of the function of the stress and the retardation value.

### (9) Contrast ratio in the front direction of liquid crystal display

After a lapse of 30 minutes since the lighting of a backlight in a darkroom at 23°C, the Y value in a XYZ display system in the front direction was measured using "EZ Contrast160D (trade name)" manufactured by ELDIM when a white image was displayed and when a black image was displayed. Based on the Y value at the time of the white image display (YW: white luminance) and the Y value at the time of the black image display (YB: black luminance), the contrast ratio "YW/YB" was calculated.

### (10) Contrast ratio in oblique direction of liquid crystal display

After a lapse of 30 minutes since the lighting of a backlight in a darkroom at 23°C, the Y value in a XYZ display system was measured using "EZ Contrast160D (trade name)" manufactured by ELDIM when a white image was displayed and when a black image, while changing an azimuthal angle from 0° to 360° in the direction of a polar angle of 60° to measure the Y value at azimuthal angles of 45°, 135°, 225°, and 315°. Based on the Y value at the time of the white image display (YW: white luminance) and the Y value at the time of the black image display (YB: black luminance), the contrast ratio "YW/YB" in the oblique direction was calculated, and average values of the contrast ratio in the oblique direction at the azimuthal angles of 45°, 135°, 225°, and 315° were determined.

### (11) Nicks

After a lapse of 30 minutes since the lighting of the backlight in a darkroom at 23°C, the display surface at the time of black display was observed visually, and the presence or absence of nicks was determined based on the presence or absence of bright point.
A: No nicks were observed.
B: Although some nicks were observed, they were in a practically acceptable level.
C: Nicks were observed, which were in a practically unacceptable level.

### [Polarizer]

### (Reference Example 1)

A 75 µm thick polymer film containing a polyvinyl alcohol resin as a main component (Kuraray Co., Ltd., trade name "VF-PS#7500") was immersed in five baths in the conditions described in [1] to [5] below with a tensile force being applied in the longitudinal direction of the film, whereby the film was stretched so that the final stretch ratio would be 6.2 times its original length. This stretched film was dried in an air circulation oven at 40°C for 1 minute. Thus, a polarizer A was produced.

### <Conditions>

[1] Swelling bath: pure water at 30°C
[2] Dye bath: an aqueous solution at 30°C containing 0.032 parts by weight of iodine with respect to 100 parts by weight of water and 0.2 parts by weight of potassium iodide with respect to 100 parts by weight of water
[3] First crosslinking bath: an aqueous solution at 40°C containing 3 wt% potassium iodide and 3wt% boric acid
[4] Second crosslinking bath: an aqueous solution at 60°C containing 5 wt% potassium iodide and 4 wt% boric acid
[5] Washing bath: an aqueous solution at 25°C containing 3 wt% potassium iodide

### (Reference Example 2)

A polarizer B was produced in the same manner and under the same conditions as in Reference Example 1, except that, in the dye bath, the added amount of iodine described in the condition [2] was set to 0.031 parts by weight with respect to 100 parts by weight of water.

### (Reference Example 3)

A polarizer C was produced in the same manner and under the same conditions as in Reference Example 1, except that, in the dye bath, the added amount of iodine described in the condition [2] was set to 0.027 parts by weight with respect to 100 parts by weight of water.

### [First retardation layer]

### (Reference Example 4)

A 100 µm thick polymer film containing a norbornene resin (OPTES INC., trade name "ZEONOR ZF14-100") was stretched 2.7 times in an air circulation constant-temperature oven at 150°C by a fixed-end transverse uniaxial stretching method (a method in which the film is stretched in its width direction with the longitudinal direction of the film being fixed) using a tenter stretching machine. Thus, a retardation film (A) was obtained. The index ellipsoid of this retardation film (A) had the relationship of nx > ny > nz (negative biaxiality). The retardation film (A) had a thickness of 35 µm and satisfied: T[590] = 91%, Re[590] = 120nm, Rth[590] = 160nm, Nz coefficient at a wavelength of 590 nm = 1.33, C[590] = 5.1 × 10⁻¹² m²/N.

### (Reference Example 5)

A 100 µm thick polymer film including a norbornene resin film (OPTES INC., trade name "ZEONOR ZF14-100") was stretched 1.46 times in an air circulation oven at 150°C by a free-end uniaxial stretching method using a tenter stretching machine. Thus, a retardation film (D) was obtained. The index ellipsoid of this retardation film (D) had the relationship of nx > ny = nz (positive uniaxiality). The retardation film (D) had a thickness of 68 µm and satisfied: Re[590] = 140 nm, Rth[590] = 140 nm, Nz coefficient at a wavelength of 590 nm = 1.0, C[590] = 5.1 × 10⁻¹² m²/N.

### [Second retardation layer]

### (Reference Example 6)

In a reaction vessel (500 ml) equipped with a mechanical stirrer, a Dean-Stark apparatus, a nitrogen inlet tube, a thermometer, and a cooling tube, 17.77 g (40 mmol) of 2,2-bis(3,4-dicarboxyphenyl)hexafluoropropane dianhydride (Clariant (Japan) K.K.) and 12.81 g (40 mmol) of 2,2-bis(trifluoromethyl)-4,4'-diaminobiphenyl (Wakayama Seika Kogyo Co., Ltd.) were added. Subsequently, a solution obtained by dissolving 2.58 g (20 mmol) of isoquinoline in 257.21 g of m-cresol was added, and the mixture was stirred (600 r/min) for 1 hour at 23°C, thus obtaining a uniform solution. Then, the reaction vessel was heated using an oil bath so that the temperature inside the reaction vessel would be 180°C ± 3°C. While maintaining the temperature, the solution was stirred for 5 hours, thus obtaining a yellow solution. The solution further was stirred for 3 hours. Thereafter, heating and stirring were stopped, and the mixture was allowed to stand to cool to the room temperature, whereby a polymer was deposited in the gel form.

Acetone was added to the yellow solution in the reaction vessel so as to dissolve the gel completely, thus producing a diluted solution (7 wt%). This diluted solution was added to 21 of isopropyl alcohol gradually under stirring, and then white powder was deposited. This powder was filtered out and was put into 1.5 1 of isopropyl alcohol for washing. The washing was completed by repeating the same operation once again, and thereafter, the powder was filtered out again. This was dried in an air circulation constant-temperature oven at 60°C for 48 hours and then at 150°C for 7 hours, thus obtaining polyimide powder represented by the following structural formula (III) with a yield of 85%. The weight-average molecular weight (Mw) of the polyimide was 124000 and the imidization ratio was 99.9%.

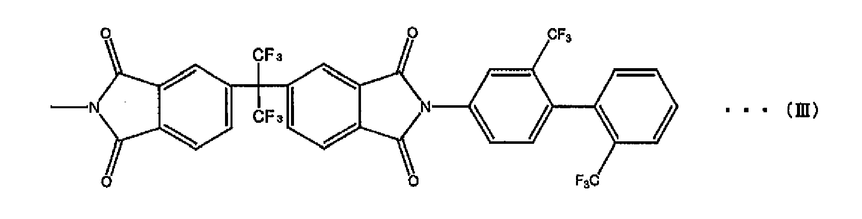

The polyimide powder was dissolved in methyl isobutyl ketone, thus preparing a 15 wt% polyimide solution. This polyimide solution was flow-expanded uniformly in a sheet-like shape on a surface of a triacetyl cellulose film (with a thickness of 80 µm) using a slot die coater. Then, the film was put in a multiple-chamber air circulation drying oven, and the solvent was evaporated by raising the temperature of the oven gradually from a low temperature, namely, at 80°C for 2 minutes, at 135°C for 5 minutes, and then at 150°C for 10 minutes. Thus, a 3.7 µm thick laminate (C) including the polyimide layer and the triacetyl cellulose film was obtained. The index ellipsoid of the laminate (C) had the relationship of nx = ny > nz (negative uniaxiality), and the laminate (C) satisfied: T[590] = 90%, Re[590] = 1 nm, Rth[590] = 210 nm. Note here that optical characteristics of the laminate (C) at a portion where the polyimide layer is provided were Rth[590] = 150nm and Δn_{xz} = 0.04.

### [Polyvinyl alcohol resin-containing water-soluble adhesive containing metal compound colloid]

### (Reference Example 7)

100 parts by weight of an acetoacetyl group-containing polyvinyl alcohol resin (Nippon Synthetic Chemical Industry Co., Ltd., trade name "GOHSEFIMER Z200", average polymerization degree: 1200, saponification degree: 98.5 mol%, acetoacetylation degree: 5 mol%) and 50 parts by weight of methylol melamine were dissolved in pure water under a temperature condition of 30°C, thus obtaining an aqueous solution whose solid content had been adjusted to 3.7%. With respect to 100 parts by weight of this aqueous solution, 18 parts by weight of alumina colloid aqueous solution (average particle diameter: 15 nm, solid content: 10%, positively charged) was added, thus preparing a water-soluble adhesive. The water-soluble adhesive had a viscosity of 9.6 mPa.s and a pH of 4 to 4.5.

### [First polarizing plate]

### (Reference Example 8)

On one side of the polarizer A of Reference Example 1, the retardation film (A) of Reference Example 4 was attached via a water-soluble adhesive containing a polyvinyl alcohol resin (Nippon Synthetic Chemical Industry Co., Ltd., trade name "GOHSEFIMER Z200") in such a manner that the slow axis of the retardation film (A) and the absorption axis of the polarizer A were orthogonal to each other. Next, on the other side of the polarizer A, an 80 µm thick polymer film containing a cellulose resin (Fuji Photo Film Co., Ltd., trade name "TD80UF") was attached via the water-soluble adhesive. Thus, a polarizing plate A1 was produced. In Comparative Example 3, this polarizing plate A1 was used also as the second polarizing plate. The properties of the polarizing plate A1 are shown in Table 1 below.

**[Table 1]**

| | Ref. Ex. 8 | Ref. Ex. 9 | Ref. Ex. 10 | Ref. Ex. 11 | Ref. Ex. 12 | Ref. Ex. 13 | Ref. Ex. 14 | Ref.Ex. 15 | Ref. Ex. 16 |
|---|---|---|---|---|---|---|---|---|---|
| Polarizing plate | A1 | B1 | C1 | A3 | A4 | A5 | A2 | B2 | C2 |
| Polarizer | A | B | C | A | A | A | A | B | C |
| Index ellipsoid of retardation layer | nx>ny>nz | nx>ny>nz | nx>ny>nz | nx>ny=nz | nx>ny=nz | nx>ny>nz | nx=ny>nz | nx=ny>nz | nx=ny>nz |
| Transmittance(%) | 41.5 | 42.6 | 43.5 | 41.5 | 41.5 | 41.5 | 41.5 | 42.6 | 43.5 |
| Polarization degree (%) | 99.9 | 99.9 | 99.9 | 99.9 | 99.9 | 99.9 | 99.9 | 99.9 | 99.9 |
| Iodine content (wt%) | 2.95 | 2.77 | 2.09 | 2.95 | 2.95 | 2.95 | 2.95 | 2.77 | 2.09 |
| Potassium content (wt%) | 0,62 | 0.61 | 0.58 | 0.62 | 0.62 | 0.62 | 0.62 | 0.61 | 0.58 |
| Boron content (wt%) | 2 | 2 | 2 | 2 | 2 | 2 | 2 | 2 | 2 |
| Metal compound colloid | none | none | none | none | present | present | - | - | - |
| Stretching method | fixed-end | fixed-end | fixed-end | free-end | free-end | fixed-end | - | - | - |

### (Reference Example 9)

A polarizing plate B1 was produced in the same manner as in Reference Example 8, except that the polarizer B of Reference Example 2 was used instead of the polarizer A. The properties of the polarizing plate B1 are shown in Table 1 above.

### (Reference Example 10)

A polarizing plate C1 was produced in the same manner as in Reference Example 8, except that the polarizer C of Reference Example 3 was used instead of the polarizer A. The properties of the polarizing plate C1 are shown in Table 1 above.

### (Reference Example 11)

A polarizing plate A3 was produced in the same manner as in Reference Example 8, except that the retardation film (D) of Reference Example 5 was used instead of the retardation film (A). The properties of the polarizing plate A3 are shown in Table 1 above.

### (Reference Example 12)

A polarizing plate A4 was produced in the same manner as in Reference Example 11, except that the water-soluble adhesive of Reference Example 7 was used as the water-soluble adhesive. The properties of the polarizing plate A4 are shown in Table 1 above.

### (Reference Example 13)

A polarizing plate A5 was produced in the same manner as in Reference Example 11, except that the retardation film (A) of Reference Example 4 was used instead of the retardation film (D). The properties of the polarizing plate A5 are shown in Table 1 above.

### [Second polarizing plate]

### (Reference Example 14)

On one side of the polarizer A of Reference Example 1, the laminate C of Reference Example 6 was attached via a water-soluble adhesive containing a polyvinyl alcohol resin (Nippon Synthetic Chemical Industry Co., Ltd., trade name "GOHSEFIMER Z200") in such a manner that the triacetyl cellulose film side of the laminate C faced the polarizer A. Then, on the other side of the polarizer A, an 80 µm thick polymer film containing a cellulose resin (Fuji Photo Film Co., Ltd., trade name "TD80UF") was attached via the water-soluble adhesive. In this manner, a polarizing plate A2 was produced. The properties of the polarizing plate A2 are shown in Table 1 above.

### (Reference Example 15)

A polarizing plate B2 was produced in the same manner as in Reference Example 14, except that the polarizer B of Reference Example 2 was used instead of the polarizer A. The properties of the polarizing plate B2 are shown in Table 1 above.

### (Reference Example 16)

A polarizing plate C2 was produced in the same manner as in Reference Example 14, except that the polarizer C of Reference Example 3 was used instead of the polarizer A. The properties of the polarizing plate C2 are shown in Table 1 above.

### [Liquid crystal cell]

### (Reference Example 17)

A liquid crystal panel was taken out from a commercially available liquid crystal display (BenQ, 32-inch liquid crystal television, trade name "DV3250") including a VA mode liquid crystal cell, and optical films, such as polarizing plates, arranged on the upper and lower sides of the liquid crystal cell were all removed. Then, both sides of a glass plate of this liquid crystal cell were washed. Thus, a liquid crystal cell A was obtained.

### [Liquid crystal panel and liquid crystal display]

### (Example 1)

On the display surface side of the liquid crystal cell A of Reference Example 17, the polarizing plate A1 (the first polarizing plate) of Reference Example 8 was attached via an acrylic pressure-sensitive adhesive (with a thickness of 20 µm) in such a manner that the retardation film (A) side became the liquid crystal cell A side and the absorption axis direction of the polarizing plate A1 became parallel to the long-side direction of the liquid crystal cell A. Then, on the back surface side (the backlight side) of the liquid crystal cell A, the polarizing plate B2 (the second polarizing plate) of Reference Example 15 was attached via an acrylic pressure-sensitive adhesive (with a thickness of 20 µm) in such a manner that the laminate C side thereof became the liquid crystal cell A side and the absorption axis direction of the polarizing plate B2 became orthogonal to the long-side direction of the liquid crystal cell A. Thus, a liquid crystal panel A was obtained. At this time, the absorption axis of the first polarizing plate was orthogonal to the absorption axis of the second polarizing plate. The liquid crystal panel A then was bonded to a backlight unit included in the original liquid crystal display, thus producing a liquid crystal display A. The properties of the thus-obtained liquid crystal display A are shown in Table 2 below.

### (Example 2)

A liquid crystal panel B and a liquid crystal display B were produced in the same manner as in Example 1, except that the polarizing plate C2 of Reference Example 16 was used as the second polarizing plate. The properties of the thus-obtained liquid crystal display B are shown in Table 2 below.

### (Example 3)

A liquid crystal panel C and a liquid crystal display C were produced in the same manner as in Example 1, except that the polarizing plate A3 of Reference Example 11 was used as the first polarizing plate. The properties of the thus-obtained liquid crystal display C are shown in Table 2 below.

### (Example 4)

A liquid crystal panel D and a liquid crystal display D were produced in the same manner as in Example 2, except that the polarizing plate A3 of Reference Example 11 was used as the first polarizing plate. The properties of the thus-obtained liquid crystal display D are shown in Table 2 below.

### (Example 5)

A liquid crystal panel E and a liquid crystal display E were produced in the same manner as in Example 1, except that the polarizing plate A4 of Reference Example 11 was used as the first polarizing plate. The properties of the thus-obtained liquid crystal display E are shown in Table 2 below.

### (Example 6)

A liquid crystal panel F and a liquid crystal display F were produced in the same manner as in Example 2, except that the polarizing plate A4 of Reference Example 12 was used as the first polarizing plate. The properties of the thus-obtained liquid crystal display F are shown in Table 2 below.

### (Example 7)

A liquid crystal panel G and a liquid crystal display G were produced in the same manner as in Example 1, except that the polarizing plate A5 of Reference Example 13 was used as the first polarizing plate. The properties of the thus-obtained liquid crystal display G are shown in Table 2 below.

### (Example 8)

A liquid crystal panel H and a liquid crystal display H were produced in the same manner as in Example 2, except that the polarizing plate A5 of Reference Example 13 was used as the first polarizing plate. The properties of the thus-obtained liquid crystal display H are shown in Table 2 below. (Comparative Example 1)

A liquid crystal panel I and a liquid crystal display I were produced in the same manner as in Example 1, except that the polarizing plate B1 of Reference Example 9 was used as the first polarizing plate and the polarizing plate A2 of Reference Example 14 was used as the second polarizing plate. The properties of the thus-obtained liquid crystal display I are shown in Table 2 below.

### (Comparative Example 2)

A liquid crystal panel J and a liquid crystal display J were produced in the same manner as in Example 1, except that the polarizing plate C₁ of Reference Example 10 was used as the first polarizing plate and the polarizing plate A2 of Reference Example 14 was used as the second polarizing plate. The properties of the thus-obtained liquid crystal display J are shown in Table 2 below.

### (Comparative Example 3)

A liquid crystal panel K and a liquid crystal display K were produced in the same manner as in Example 1, except that the polarizing plate A1 of Reference Example 8 was used as the first polarizing plate and the polarizing plate A1 of Reference Example 8 was used as the second polarizing plate. The properties of the thus-obtained liquid crystal display K are shown in Table 2 below.

**[Table 2]**

| | First polarizing plate | T₁(%) | Second polarizing plate | T₂(%) | ΔT (T₂-T₁) | Contrast ratio in front direction | Contrast ratio in oblique direction | Evaluation of nicks |
|---|---|---|---|---|---|---|---|---|
| Ex.1 | A1 | 41.5 | B2 | 42.6 | 1.1 | 650 | 90 | B |
| Ex. 2 | A1 | 41.5 | C2 | 43.5 | 2 | 628 | 88 | B |
| Ex. 3 | A3 | 41.5 | B2 | 42.6 | 1.1 | 649 | 80 | B |
| Ex. 4 | A3 | 41.5 | C2 | 43.5 | 2 | 627 | 79 | B |
| Ex.5 | A4 | 41.5 | B2 | 42.6 | 1.1 | 649 | 80 | A |
| Ex. 6 | A4 | 41.5 | C2 | 43.5 | 2 | 628 | 79 | A |
| Ex. 7 | A5 | 41.5 | B2 | 42.6 | 1.1 | 649 | 90 | A |
| Ex. 8 | A5 | 41.5 | C2 | 43.5 | 2 | 628 | 99 | A |
| Comp. Ex. 1 | B1 | 42.6 | A2 | 41.5 | -1.1 | 596 | 89 | A |
| Comp. Ex. 2 | C1 | 43.5 | A2 | 41.5 | -2 | 596 | 88 | B |
| Comp. Ex. 3 | A1 | 41.5 | A1 | 41.5 | 0 | 597 | 89 | B |

As can be seen from Table 2 above, in all the examples where the transmittance (T₂) of the second polarizing plate was greater than the transmittance (T₁) of the first polarizing plate, a high contrast ratio in the front direction was achieved. In contrast, in Comparative Examples 1 and 2 where the transmittance (T₂) of the second polarizing plate was smaller than the transmittance (T₁) of the first polarizing plate and in Comparative Example 3 where the transmittance (T₂) of the second polarizing plate was equal to the transmittance (T₁) of the first polarizing plate, the contrast ratio in the front direction was low. Furthermore, in Example 1 where the first retardation layer having negative biaxiality was used, the liquid crystal display (the liquid crystal panel) was obtained whose contrast ratio in the oblique direction was higher than that of the liquid crystal display (the liquid crystal panel) of Example 3 where the first retardation layer having positive uniaxiality was used. Similarly, in Examples 2, 7 and 8 where the first retardation layers having negative biaxiality were used, the liquid crystal displays (the liquid crystal panels) were obtained whose contrast ratios in the oblique direction were higher than those of the liquid crystal displays (the liquid crystal panels) of Examples 4,5 and 6 where the first retardation layer having positive uniaxiality was used. Still further, in Examples 5 to 8 where the polyvinyl alcohol resin-containing water-soluble adhesive containing the metal compound colloid was used for the lamination of the first polarizer and the first retardation layer and for the lamination of the second polarizer and the second retardation layer, the formation of the nicks was suppressed more favorably. In Examples 1 to 4 and Comparative Examples 1 to 3, bright points caused by nicks were observed, although they were practically acceptable.

As specifically described above, the liquid crystal panel of the present invention has a high contrast ratio in the front direction. Examples of the use of the liquid crystal panel of the present invention and the liquid crystal display using the same include: office automation equipment such as desktop computers, notebook computers, and copy machines; portable devices such as mobile phones, watches, digital cameras, personal digital assistants (PDAs), and portable game devices; household electric appliances such as video cameras, televisions, and microwave ovens; vehicle-mounted devices such as back monitors, car navigation system monitors, and car audios; exhibition devices such as information monitors for commercial stores; security devices such as surveillance monitors; and nursing care and medical devices such as nursing-care monitors and medical monitors. There is no limitation on the use of the liquid crystal panel and the liquid crystal display of the present invention, and they are applicable to a wide range of fields.

The invention may be embodied in other forms without departing from the spirit or essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

## Claims

1. A liquid crystal panel comprising:
a first polarizing plate;
a second polarizing plate; and
a liquid crystal cell,
the first polarizing plate being arranged on a display surface side of the liquid crystal cell,
the second polarizing plate being arranged on a back surface side of the liquid crystal cell,
wherein the first polarizing plate comprises a first polarizer and a first retardation layer, and the first retardation layer is arranged between the first polarizer and the liquid crystal cell,
the second polarizing plate comprises a second polarizer and a second retardation layer, and the second retardation layer is arranged between the second polarizer and the liquid crystal cell,
an index ellipsoid of the first retardation layer satisfies a relationship of nx > ny ≥ nz,
an index ellipsoid of the second retardation layer satisfies a relationship of nx = ny > nz, and
a transmittance (T₂) of the second polarizing plate is greater than a transmittance (T₁) of the first polarizing plate.

2. The liquid crystal panel according to claim 1, wherein a difference between the transmittance (T₂) of the second polarizing plate and the transmittance (T₁) of the first polarizing plate (ΔT = T₂ - T₁) is in the range from 0.1 to 6.0%.

3. The liquid crystal panel according to claim 1 or 2, wherein the liquid crystal cell contains a liquid crystal molecule that is in homeotropic alignment.

4. The liquid crystal panel according to any of the preceding claims, wherein the transmittance (T₁) of the first polarizing plate is in a range from 38.3% to 43.3%.

5. The liquid crystal panel according to any of the preceding claims, wherein the transmittance (T₂) of the second polarizing plate is in a range from 41.1% to 44.3%.

6. The liquid crystal panel according to any of the preceding claims, wherein a polarization ratio of at least one of the first polarizing plate and the second polarizing plate is at least 99%.

7. The liquid crystal panel according to any of the preceding claims, wherein at least one of the first polarizer and the second polarizer contains a polyvinyl alcohol resin containing iodine.

8. The liquid crystal panel according to claim 7, wherein a difference (ΔI = I₁- I₂) between an iodine content (I₁) in the first polarizer and an iodine content (I₂) in the second polarizer is in a range from 0.1 to 2.6 wt%.

9. The liquid crystal panel according to claim 7 or 8, wherein at least one of the iodine content (I₁) in the first polarizer and the iodine content (I₂) in the second polarizer is in a range from 1.8 to 5.0 wt%.

10. The liquid crystal panel according to any of the preceding claims, wherein a slow axis of the first retardation layer is orthogonal to an absorption axis of the first polarizer.

11. The liquid crystal panel according to any of the preceding claims, wherein a retardation value (Re₁[590]) within a plane of the first retardation layer at a wavelength of 590 nm is in a range from 50 to 200 nm.

12. The liquid crystal panel according to any of the preceding claims, wherein the index ellipsoid of the first retardation layer satisfies a relationship of nx > ny > nz.

13. The liquid crystal panel according to claim 12, wherein a difference (Rth₁[590] - Re₁[590]) between a retardation value (Rth₁[590]) of the first retardation layer in a thickness direction at a wavelength of 590 nm and a retardation value (Re₁[590]) within a plane of the first retardation layer at the wavelength of 590 nm is in a range from 10 to 100 nm.

14. The liquid crystal panel according to claim 12 or 13, wherein an Nz coefficient of the first retardation layer at a wavelength of 590 nm is in a range from 1.1 to 3.0.

15. The liquid crystal panel according to any of the preceding claims, wherein the first retardation layer is a retardation film (A) containing a norbornene resin.

16. The liquid crystal panel according to claim 15, wherein the retardation film (A) containing the norbornene resin is a film produced by a fixed-end stretching method.

17. The liquid crystal panel according to any of the preceding claims, wherein a retardation value (Rth₂[590]) of the second retardation layer in a thickness direction at a wavelength of 590 nm is in a range from 100 to 400 nm.

18. The liquid crystal panel according to any of the preceding claims, wherein the second retardation layer is any one of a retardation film (B1) containing a polyimide resin, a retardation film (B2) containing a cellulose resin, and a laminate (C) of the retardation film (B1) and the retardation film (B2).

19. The liquid crystal panel according to any of the preceding claims, wherein at least one of lamination of the first polarizer and the first retardation layer and lamination of the second polarizer and the second retardation layer, the polarizer and the retardation layer are laminated via an adhesive layer.

20. The liquid crystal panel according to claim 19, wherein the adhesive layer contains a water-soluble adhesive containing a polyvinyl alcohol resin.

21. The liquid crystal panel according to claim 20, wherein the water-soluble adhesive containing the polyvinyl alcohol resin further contains a metal compound colloid.

22. A liquid crystal display comprising a liquid crystal panel, wherein the liquid crystal panel is the liquid crystal panel any of the preceding claims.
